(19) Europäisches Patentamt

European Patent Office

Office européen des brevets

(11) **EP 0 993 147 A2**

(12) **EUROPEAN PATENT APPLICATION**

(43) Date of publication:
**12.04.2000 Bulletin 2000/15**

(51) Int. Cl.$^7$: **H04L 12/28**, H04L 29/06

(21) Application number: **99119075.2**

(22) Date of filing: **30.09.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **30.09.1998 JP 29459298
26.11.1998 JP 33632198
19.05.1999 JP 13931199**

(71) Applicant:
**Mitsubishi Materials Corporation
Chiyoda-ku, Tokyo 100-004 (JP)**

(72) Inventors:
• **Tari, Kazuyoshi**
  **Omiya-shi, Saitama 330-0835 (JP)**
• **Unoki, Hiroyuki**
  **Omiya-shi, Saitama 330-0835 (JP)**
• **Murayama, Kenichi**
  **Omiya-shi, Saitama 330-0835 (JP)**
• **Nakamura, Kenzo**
  **Omiya-shi, Saitama 330-0835 (JP)**
• **Yokoshima, Takao**
  **Omiya-shi, Saitama 330-0835 (JP)**

(74) Representative: **HOFFMANN - EITLE**
**Patent- und Rechtsanwälte
Arabellastrasse 4
81925 München (DE)**

(54) **Radio server system**

(57)    The present invention relates to a radio server system. The communications service area of this radio server system consists of a plurality of zones Z1 - Z4 and the radio server system connects to the Internet via a radio server (A) in which a mobile radio is connected to a base station radio B-1 by carrying out data communications between base station radios B-1, B-2, B-3, B-4 disposed in each of the zones and a plurality of mobile radios 1-1 such that the base station radio B-1 continuously sends data and the mobile radio 1-1 sends a burst signal to the base station radio B-1, wherein the base station radio B-1 communicates using a single frequency that is different from the frequency used by neighboring base station radios B-1, and each mobile radio 1-1 detects the frequency used by the base station radio B-1 in the base station radio's zone and communicates with the base station radio using the detected frequency.

F I G. 1

## Description

BACKGROUND OF THE INVENTION

Field of the Invention

The present invention relates to a radio server system which connects to the Internet via a radio server in which mobile radios are connected to base station radios by means of mobile communications. The present invention further relates to a computer-readable recording media in which the programs for realizing the functions of this radio server system are recorded.

This application is based on patent applications No. Hei 10-294592, No. Hei 10-336321, and No. Hei 11-139311 filed in Japan, the content of which is incorporated herein by reference.

Description of the Related Art

In a wireless communications apparatus provided with a base wireless device (referred to as a "base station radio" hereinafter) and a mobile wireless device (referred to as a "mobile radio" hereinafter), it is necessary to inform a base station radio that a mobile radio has entered its communications area in the case where the movement of the mobile radio involves a change in the communications area. This is referred to as location registration. The mobile radio transmits a location registration request to the base station radio using a predetermined frequency. Communications may be initiated once the recording request is acknowledged by the base station radio. Because communications are possible from anywhere, mobile radios are characterized in their ability to enable communications even when the user is moving, as in the case where riding in an automobile, for example.

However, because base station radios use different frequencies in each of the regions in which they are provided, the mobile radio does not know which frequency to employ when making the recording request.

Accordingly, this is problematic as time is required to perform position recording.

Moreover, a method in which the mobile radio sequentially switches the frequency which can be used is also problematic as this too requires considerable time. Moreover, even if the frequency is one at which the mobile radio can transmit, it is possible that transmission is not permitted at that frequency in that area. Accordingly, this is problematic since transmission and reception by sequential switching requires a great deal of time.

The pagers which are used in mobile communications are a radio paging system capable only of reception, and have come to be used as a wireless data communications system which does not require connection. Connection is not required because a connection is physically established since the frequency band employed is fixed.

However, this system is problematic as it allows for one-way communications only. In other words, since communication is one-way, it becomes necessary to employ a wire device (telephone) when responding to a page. If such a communication means is not available in the vicinity of the pager's user, then a response cannot be provided. Moreover, the person transmitting the page has no way of knowing whether or not the data was relayed. Accordingly, given these problems, the applications for such pagers are limited.

It is necessary to expand the area covered by one base station radio in order to fix the frequency used in a wireless data communications system such as a pager. Thus, communications must be carried out at high power. This increases the cost of the base station radio facility. Moreover, because of the large power output, the base station radio cannot be placed at a location where people might approach.

Two-way communications are possible in mobile communications like cellular telephones which use a FDMA (Frequency Division Multiple Access) method or TDMA (Time Division Multiple Access) method. In order to increase frequency utilization efficiency when utilizing the FDMA method within a zone, a procedure must be performed for the frequency which is to be used. Likewise, in order to increase frequency utilization efficiency when utilizing the TDMA method within a zone, a procedure must be performed for the time interval which is to be used.

The reason why it is necessary to increase the frequency utilization efficiency in mobile communications such as cellular telephones is because time and frequency cannot be shared by users since voice is used. Almost all telephone conversations require a minimum of several seconds to several minutes. For this reason, if a common time and frequency are used, then, when using a telephone, it becomes necessary to wait for the completion of another user's conversation. Take, for example, the case where three people wish to use a public telephone.

Assume that the first person takes 20 minutes, the second person takes a brief 2 minutes, and the third person takes about 5 minutes. If there is only one telephone in the area (i.e., the case of a common frequency and time), then the third person will have had to wait 22 minutes for its use. If, however, there are two telephones, then a public telephone will be available 10 minutes after the second individual uses the second telephone. Time and frequency must be used efficiently when the usage times differ in this way.

Determining the order of use becomes problematic here. In the case where one line is formed, the users may take the open telephones in order of their position in line. When two lines have been formed, however, a forth person who lined up behind the second person will be able to use the telephone earlier than the third person. In other words, management is required in order to perform an efficient distribution such as in the case where one line is formed and the users use the telephones sequentially. The FDMA and TDMA methods render communications more efficient by performing this type of control in wireless communications. In these communications methods, a procedure is necessary for obtaining permission to use a channel, and the frequency utilization state, time allocation state and the like must be known. Thus, data for obtaining permission to use a channel must be transmitted between the sender and the receiver, and time is required to analyze the frequency utilization state and the time allocation state.

The data quantity for much of the data used in wireless data communications is small, as in the case of electronic mail, for example. E-mail and the like can be sent in about one second, even when the transmission rate is on the order of several kbps. Thus, this type of wireless data communication could be sufficiently carried out in the time required to establish a connection in a wireless communications system requiring a connection. Accordingly, there is much waste and poor efficiency in a wireless communications system which requires a connection.

In addition, as discussed above, the duration of human conversation will vary according to the individual. For this reason, methods such as FDMA, TDMA and CDMA (Code Division Multiple Access) may be considered as methods offering good efficiency in this case. If the object of transmission is limited to data, however, the transmission quantity is limited to a certain size, and most transmissions can be accomplished within a few seconds. From this perspective, then, multiplexing is not necessary.

The wave propagation characteristics for a moving body vary in a non-linear manner in accordance with the surrounding environment and the movement of the body. Thus, even if a connection is established, the reliability of the data which is transmitted thereafter may be impaired because of changes in the wave environment. Frequency synchronization must be carried out at high speed in the FDMA method, making the frequency synchronization method difficult. Data reliability may be lost, the circuit design of the mobile radio becomes complicated and larger, and costs rise.

Changing the frequency and reception time within a zone in mobile communications causes the problem of complicating detection of the characteristics of the wireless propagation path. It also becomes difficult to use a device such as an equalizer, which compensates for data reliability by knowing the wireless propagation path characteristics.

Because of the problems described above, data reliability is reduced, so that it is not possible to use data for applications requiring a high degree of data reliability.

The system in a FDMA or TDMA method requires a broad band frequency. For this reason, a quasi-microwave frequency band is used. Much of the commercial wireless used in the current UHF band uses a two-frequency symplex operation method. Due to the increase in capacity and the expansion of the area in which cellular telephones can be employed, the use of a portion of commercial wireless has been given over to cellular telephones. However, transferring the frequency band used by the cellular telephone system to the UHF band in this way is not possible because of the system's need for broad band frequency. Accordingly, a method for effective utilization of this type of frequency band has been desired.

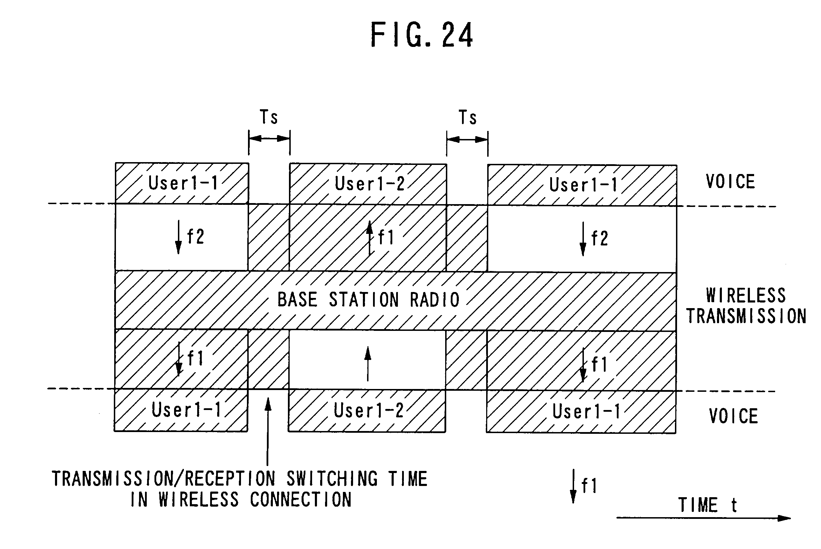

The two-cycle symplex operation method used in commercial wireless, for example, requires one-on-one or one-on-N communications in order to carry out voice communications in real time. Figure 24 shows the operating state of a wireless communications system in a two-cycle symplex operation method. As shown in Figure 24, a mobile radio user transmits voice data to a base station radio after modulation at frequency f2. The base station radio modulates this voice data at frequency f1, and sends it to the mobile radio. An up and down wireless connection transmission/reception switching time Ts at the base station radio is required each time the transmission ends. In this way, the time for transmitting and receiving a signal in a two-cycle symplex operation method becomes diverse. Further, the time required for transmission/reception switching for the up and down wireless connection at the base station radio is lost, making it difficult to carry out data communications efficiently.

SUMMARY OF THE INVENTION

It is therefore an object of the present invention to provide a radio server system which does not require a connection procedure and is capable of two-way communications, for which a reduction in the base station radio facilities cost can be anticipated, the provision of the base station radio facility can be easily carried out, and data transmission in packet units can be carried out with good efficiency.

The present invention accomplishes this objective through the provision of a radio server system in which the communications service area consists of a plurality of zones, the radio server system connecting to the Internet via a radio server in which a mobile radio is connected to a base station radio by carrying out data communications between base station radios disposed in each of the zones and a plurality of mobile radios such that the base station radio continuously sends data and the mobile radio sends a burst signal to the base station radio; wherein:

the base station radio communicates using a single frequency, and neighboring base station radios communicate using a frequency which is different from that used by said base station radio; and

each mobile radio detects the frequency used by said base station radio within the zone of said base station radio, and communicates with said base station radio using said detected frequency.

In the present invention's radio server system which connects to the Internet via a radio server in which a mobile radio is connected to a base station radio by carrying out data communications between base station radios disposed in each of the zones and a plurality of mobile radios such that the base station radio continuously sends data and the mobile radio sends a burst signal to the base station radio, each of the base station radios communicates using a single frequency within one zone, these frequencies differing for neighboring zones, and each mobile radio detects the frequency used by a base station radio within each zone, and communicates with the base station radio using the detected frequency. Accordingly, the present invention is advantageous in that it does not require a connection procedure, it is capable of performing two-way communications, the facility cost for the base station radio can be reduced and the provision of the base station radio can be easily carried out.

Further, the present invention achieves the aforementioned objective with the provision of a computer-readable recording media which records a program for a mobile radio in a radio server system in which the communications service area consists of a plurality of zones, the radio server system connecting to the Internet via a radio server in which a mobile radio is connected to a base station radio by carrying out data communications between base station radios disposed in each of the zones and a plurality of mobile radios such that the base station radio continuously sends data using a single frequency which differs from the frequencies used by neighboring base station radios, and the mobile radio sends a burst signal to the base station radio; wherein the program executes by computer a means for detecting the frequency used by the base station radio in the base station radio zone, and communicating with the base station radio at the detected frequency.

In the present invention's radio server system in which the communications service area consists of a plurality of zones, the radio server system connecting to the Internet via a radio server in which a mobile radio is connected to a base station radio by carrying out data communications between base station radios disposed in each of the zones and a plurality of mobile radios such that the base station radio continuously sends data and the mobile radio sends a burst signal to the base station radio, there is recorded in a computer-readable recording media the program for realizing the control functions of the base station radios in a radio server system in which each of the base station radios communicates using a single frequency within one zone, the frequency differing from that used in neighboring zones, and each mobile radio detects the frequency used by the base station radios within each zone, and communicates with the base station radio using the detected frequency. As a result, the programs recorded in this recording media can be read into the computer system and executed. Thus, the present invention is advantageous in that a connection procedure is not needed, two-way communications can be carried out, the facilities cost of the base station radio can be reduced, and the provision of the base station radio can be carried out easily.

Note that the symbols used in the claims in this specification have no effect on the interpretation of those claims.

BRIEF DESCRIPTION OF THE DRAWINGS

Figure 1 is a block diagram showing the structure of a first embodiment of the present invention.
Figure 2 is a block diagram showing the structure of the base station radio B-1 that is shown in Figure 1.
Figure 3 is a block diagram showing the structure of the mobile radio 1-1 that is shown in Figure 1.
Figure 4 is a flow chart showing the transmission operation of mobile radio 1-1 shown in Figure 1.
Figure 5 is an explanatory diagram showing the structure of a second embodiment of the present invention.
Figure 6 is a sequence diagram for explaining the transmission control operation of the radio server system shown in Figure 5 according to a second embodiment of the present invention.
Figure 7 is a sequence diagram for explaining the transmission control operation of the radio server system shown in Figure 5 according to a second embodiment of the present invention.
Figure 8 is a block diagram showing the structure of a wireless communications device composing a mobile radio in the radio server system according to a second embodiment of the present invention.
Figure 9 is a flow chart showing the control operation for the frequency synchronization control means in Figure 8.
Figure 10 is a flow chart showing the control operation for the frequency synchronization control means in Figure 8.
Figure 11 is a flow chart showing the phase compensating control means in Figure 8.
Figure 12 is an explanatory diagram showing the control operation during adaptive phase control.
Figure 13 is a characteristics diagram showing the control state in adaptive phase control.
Figure 14 is a block diagram showing the structure of important elements of the wireless communications device composing the mobile radio in the radio server system according to a third embodiment of the present invention.

Figure 15 is a block diagram showing the structure of the wireless communications device composing the mobile radio in the radio server system according to a fourth embodiment of the present invention.

Figure 16 is a block diagram showing the structure of an equalizer for performing phase compensation during frequency synchronization control.

Figure 17 is a characteristics diagram showing the characteristics of the bit error rate in the demodulated output from the mobile radio in the radio server system.

Figure 18 is a characteristics diagram showing the dispersion characteristics of the presumed error in phase compensation in a mobile radio in the radio server system.

Figure 19 is a flow chart showing the transmission control operation of the communications control circuit in a wireless communications device composing a mobile radio in the radio server system shown in Figure 15.

Figure 20 is a flowchart showing the detection operation of the circuit for detecting the state of the wireless propagation path in the wireless communications device composing the mobile radio in the radio server system shown in Figure 15.

Figure 21 is an explanatory diagram showing a concrete example of the communications state in the wireless communications device composing a mobile radio in the radio server system shown in Figure 15.

Figure 22 is a sequence diagram showing the transmission control operation in a mobile radio in a two-cycle symplex operation type radio server system according to a fifth embodiment of the present invention.

Figure 23 is a flow chart showing the processing details of transmission control in a mobile radio in a two-cycle symplex operation type radio server system according to a fifth embodiment of the present invention.

Figure 24 is a sequence diagram showing an example of the communications state in a radio server system employing a two-cycle symplex operation design.

Figure 25 is a diagram showing the BER characteristics for the multipath fading 2-ray model.

Figure 26 is a diagram showing the BER characteristics for the Doppler frequency.

DESCRIPTION OF THE PREFERRED EMBODIMENTS

The following embodiments are not meant to limit the invention disclosed in the claims. Also, to achieve the objectives, not all the combinations of the features presented in the embodiments may be required at all times.

Embodiment 1

In the following, the base station radio and mobile radio according to a first embodiment of the present invention will be explained with reference to the figures.

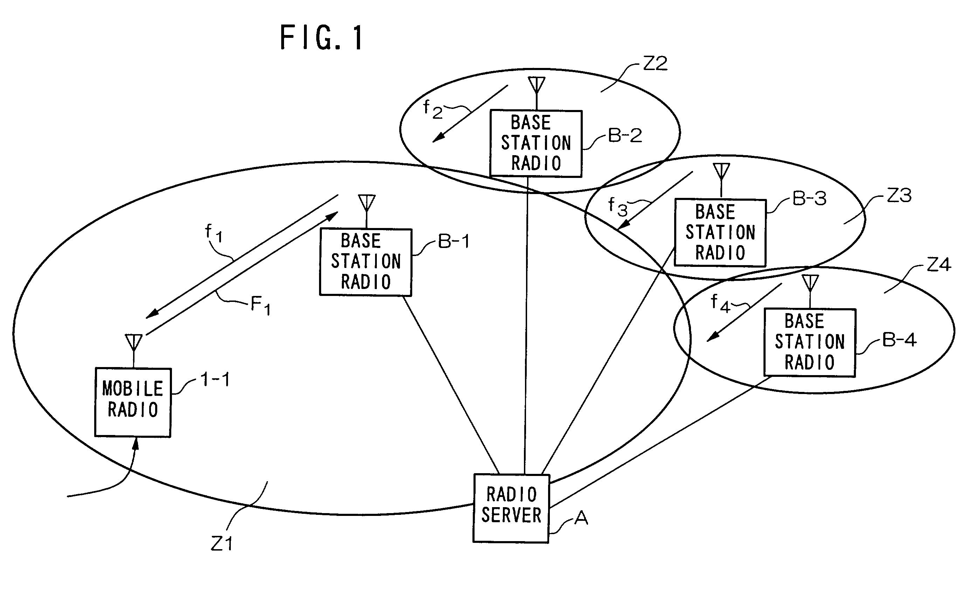

Figure 1 is a block diagram of the entire structure of the system in the first embodiment. Radio server A, formed of a computer, is connected by wiring to a plurality of base station radios B-1~B-4. Radio server A is connected to the Internet via a wired communications circuit. Only four base station radios B-1~B-4 are shown here. The symbol 1-1 is a mobile radio which communicates with base station radio B-1 via radio. The symbol f1 indicates the frequency employed by base station radio B-1 during transmission. F1 is the frequency employed by mobile radio 1-1 during transmission. Similarly, the symbols f2~f4 indicate the frequencies employed by base station radios B-2~B-4 during transmission. The communication areas of these bases stations B-1~4 are divided into four respective zones Z1, Z2, Z3, and Z4.

In the following explanation, the frequency used for transmission by base station radios B-1~B-4 (f1 shown in Figure 1) is referred to as a "down frequency," while the frequency used for transmission by mobile radio 1-1 (F1 shown in Figure 1) is referred to as an "up frequency."

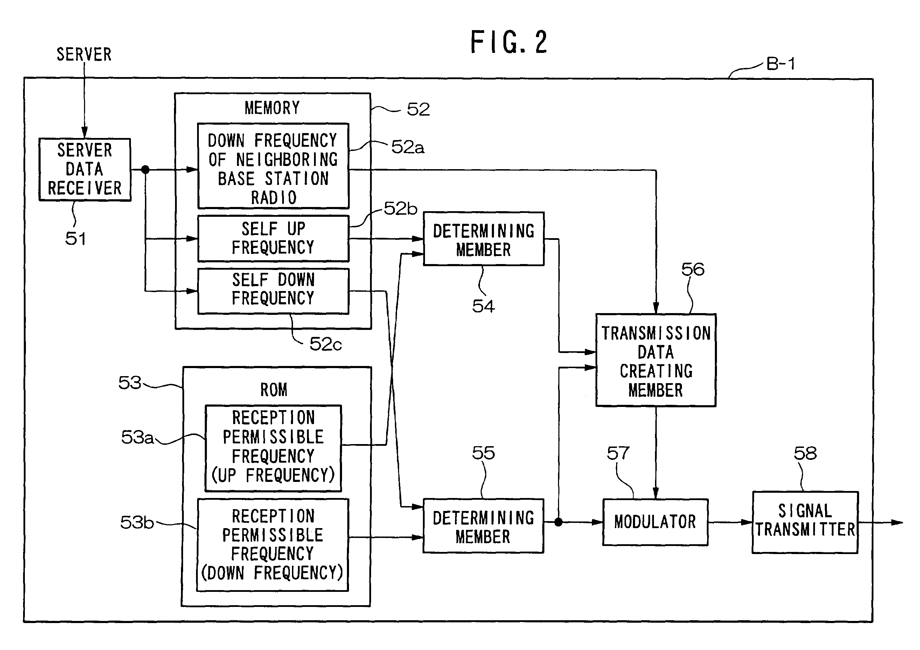

Figure 2 is a block diagram showing the structure of the base station radio B-1 shown in Figure 1. Bases stations B-2~B-4 have the same structure as shown in Figure 2. In this figure, the symbol 51 is a server data receiver for receiving data sent by radio server A. 52 is a memory for storing the data received by server data receiver 51. 53 is a ROM for recording the frequency at which transmission and reception is possible. ROM 53 records a plurality of frequencies 53a at which reception is possible (up frequencies) and frequencies 53b at which transmission is possible (down frequencies). Determining members 54,55 compare the data sent by radio server A and the data stored in the ROM in base station radio B1, and output the results of this comparison. 56 is a transmission data creating member for receiving the results from determining members 54,55 and creating the transmission data which is sent from base station radio B-1. 57 is a modulator for modulating the transmission data. 58 is a signal transmitter for transmitting the transmission data modulated by modulator 57.

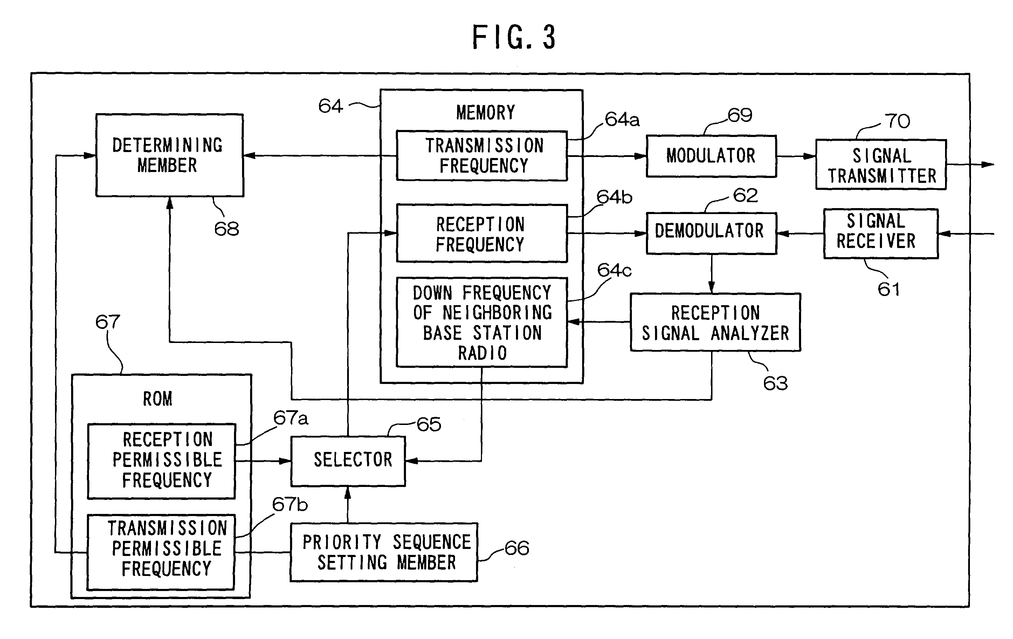

Figure 3 is a block diagram showing the structure of the mobile radio 1-1 shown in Figure 1. In the figure, 61 is a signal receiver for receiving the data sent from base station radio B-1. 62 is a demodulator for demodulating the received data. 63 is a received signal analyzer for analyzing the demodulated received data. 64 is a memory for storing the frequency of the transmitted and received signals. 65 is a selector for selecting the frequency of the received signal. 66 is a priority sequence setting member for setting the priority sequence of the received signal frequencies which are selected. 67 is a ROM for recording the frequencies at which transmission and reception are possible. 68 is a determining member for determining the transmission frequency. 69 is a modulator. 70 is a signal transmitter for transmitting the data to base station radio B-1.

Next, the communications operations of radio server A, base station radios B-1~4, and mobile radio 1-1 will be explained with reference to Figures 1, 2, and 3. Base station radio B-1 will be employed as an example.

First, radio server A informs base station radios B-1~4, which are under the management of radio server A, of the frequencies which base station radios B-1~4 are to use. Radio server A informs the same information to base station radios B-1~4. As a result, base station radios B-1~4 are made aware of the frequencies employed by the other base station radios.

The operation of base station radio B-1 will now be explained.

Server data receiver 51, which is provided to base station radio B-1, receives the down frequency information informed by radio sewer A. Next, sewer data receiver 51 stores the received information in memory 52. Sewer data receiver 51 stores the information received by neighboring base station radios (base station radios B-2~4) after separating into neighboring base station radio down frequency 52a, self up frequency 52b and self down frequency 52c.

Next, determining member 54 compares up frequency 53a stored in ROM 53 and self up frequency 52b stored in memory 52. As a result, when the self up frequency 52b which is informed by radio server A is a frequency which can be used, then this self up frequency 52b is relayed to transmission data creating member 56.

In parallel to the preceding, determining member 55 compares down frequency 53b stored in ROM 53 and self down frequency 52c stored in memory 52. As a result, when the self down frequency 52c which is informed by radio server A is a frequency which can be used, then this self down frequency 52c is relayed to transmission data creating member 56 and modulator 57.

Next, transmission data creating member 56 converts the up and down frequency information taken up by determining member 54,55 to transmission data. At the same time, transmission data creating member 56 also converts neighboring base station radio down frequency 52a stored in memory 52 to transmission data. Transmission data creating member 56 then relays the transmission data obtained from this conversion to modulator 57.

Next, modulator 57 employs the down frequency taken up by determining member 55 and modulates the transmission data formed at transmission data creating member 56. The modulated transmission data is sent from signal transmitter 58 by radio.

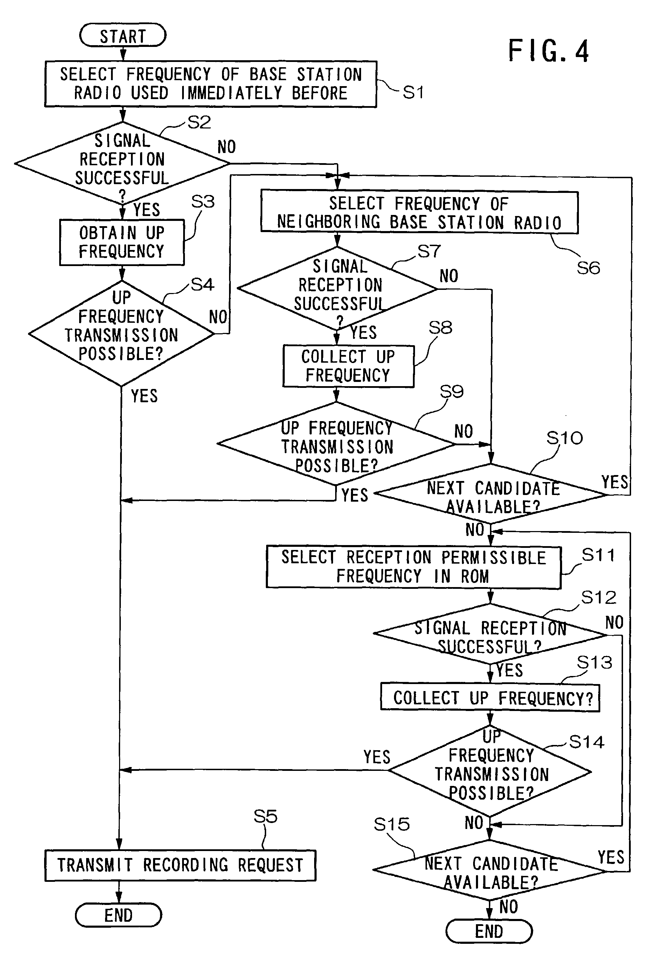

The operation of mobile radio 1-1 will now be explained with reference to Figure 4. Figure 4 is a flow chart showing the operation of mobile radio 1-1.

Demodulator 62 employs the frequency of received frequency 64b stored in memory 64, and attempts signal reception from signal receiver 61 (step S1). Reception frequency 64b is the reception frequency used until immediately before the mobile radio performs the reception operation.

Next, demodulator 62 determines whether or not signal reception has been achieved (step S2). When signal reception has been achieved, the received signal is demodulated, and relayed to received signal analyzer 63.

Next, received signal analyzer 63 analyzes the received signal and stores the down frequency of the neighboring base station radios in memory 64. At the same time, received signal analyzer 63 obtains the up frequency (step S3) and relays this up frequency to determining member 68.

Determining member 68 reads out frequency 67b at which transmission is permitted which is stored in ROM 67, and compares it with the up frequency taken up by received signal analyzer 63. Determining member 68 then employs this up frequency to determine whether or not transmission is possible (step S4). This decision determines if the received frequency can be transmitted according to whether or not it is equivalent to the plurality of transmission permissible frequencies 67b which are stored in ROM 67. As a result, when transmission is possible, determining member 68 stores this up frequency in memory 64. Next, modulator 69 employs the transmission frequency 64a stored in memory 64 to transmit a recording request to mobile radio 1-1 (step S5).

The transmission of this recording request is carried out by means of modulator 69 reading out the transmission frequency stored in memory 64, and using this frequency to transmit from signal transmitter 70.

Thus, by obtaining an up frequency using the frequency which was employed immediately before, it is possible to initiate communications without carrying out a frequency selection operation when the mobile radio is not moving in the communications area.

On the other hand, if reception was not possible in step S2, then, in Step S4, when the up frequency is not one of the permitted frequencies, selector 65 reads out the down frequency 64c of the neighboring base station radios which are recorded in memory 64, and selects a reception frequency from the read out down frequencies in accordance with the priority sequence stored in priority sequence setting member 66 (step S6). Selector 65 compares the selected reception frequency and the reception permissible frequency 67a stored in memory 67. If the selected reception frequency is a permitted frequency, then this reception frequency is stored in memory 64.

Next, demodulator 62 determines whether or not the signal can be received by using the reception frequency 64b stored in memory 64 (step S7). When the signal can be received, demodulator 62 demodulates the received signal and relays it to received signal analyzer 63.

Next, received signal analyzer 63 analyzes the received signal and stores the down frequency of the neighboring base station radios in memory 64. At the same time, received signal analyzer 63 obtains the up frequency (step S8) and relays this up frequency to determining member 68.

Next, determining member 68 reads out transmission permissible frequency 67b which is stored in ROM 67, and compares it with the up frequency taken up by received signal analyzer 63. Determining member 68 then employs this up frequency to determine whether or not transmission is possible (step S9). This decision determines if the received up frequency can be transmitted according to whether or not it is equivalent to the plurality of transmission permissible frequencies 67b which are stored in ROM 67. As a result, when transmission is possible, determining member 68 stores this up frequency in memory 64. Next, modulator 69 employs the transmission frequency 64a stored in memory 64 to transmit a recording request to mobile radio 1-1 (step S5).

If signal reception was not possible in step S7, then, when the up frequency is not a permitted frequency in step S9, the operations in Steps S6~S9 are repeated (Step S10).

Next, in step S10, when there is no other down frequency candidate, selector 65 reads out reception permissible frequency 67a stored in ROM 67, and selects the reception permissible frequency from the read out reception permissible frequencies in accordance with the priority sequence recorded in priority sequence setting member 66 (step S11). This reception permissible frequency is stored in memory 64.

Next, demodulator 62 uses reception frequency 64b stored in memory 64 to determine whether or not the signal can be received (step S12). When the signal can be received, the received signal is demodulated, and relayed to reception signal analyzer 63.

Reception signal analyzer 63 analyzes the received signal and stores the down frequencies of the neighboring base station radios in memory 64. At the same time, reception signal analyzer 63 obtains the up frequency (step S13) and relays this up frequency to determining member 68.

Determining member 68 reads out the transmission permissible frequency 67b stored in ROM 67, and compares it with the up frequency taken up by reception signal analyzer 63. Determining member 68 uses this up frequency to determine whether or not transmission is possible (step S14). This decision determines if the received up frequency can be transmitted according to whether or not it is equivalent to the plurality of transmission permissible frequencies 67b which are stored in ROM 67. As a result, when transmission is possible, determining member 68 stores this up frequency in memory 64. Next, modulator 69 employs the transmission frequency 64a stored in memory 64 to transmit a recording request to mobile radio 1-1 (step S5).

If signal reception was not possible in step S12, then, when the up frequency is not a permitted frequency in step S14, the operations in Steps S11~S14 are repeated (step S15). In addition, when there are no more candidates for the reception permissible frequency, in step S15, mobile radio 1-1 may change (move) the communication area since communication is not possible from this communication area, and again attempt the operation shown in Figure 4.

Note that in regard to the details stored in memory 64 shown in Figure 3, even if the power source for mobile radio 1-1 is turned OFF, the content immediately preceding that operation remains.

Frequency selection may be carried out by storing the program for frequency selection shown in Figure 4 in a computer-readable recording media such as a flexible disk, CD-ROM, photomagnetic disk, IC card, DVD-ROM or the like, and then executing the program by reading it into a computer system.

All or a part of the aforementioned program may be recorded or stored in a recording device such as a hard disk or a transportable media such as a floppy disk or CD-ROM. The program is read out by computer and all or part of the operations are executed.

This recording media is not limited to a device, such as a photomagnetic disk, which statically records programs. Rather, the recording media includes devices which dynamically maintain programs for a short period of time like a communications circuit when sending programs via a communications circuit such as a cable for exclusive use of the Internet or a telephone circuit, or a device which maintains programs for a fixed period of time like a radio server or the internal memory in a computer.

As explained above, in the present invention, the up frequency of a base station radio is sent using the base station radio's down frequency. For this reason, simply by searching for just the down frequency, the mobile radio can obtain the frequency to use for requesting position recording. Thus, the mobile radio can be easily connected to the Internet.

In this invention, a position recording request is made only in the case where the up frequency is a permitted frequency which was notified using the frequency which could be received after sequentially switching between the frequency used immediately before, the frequency used by the base station radios disposed in the vicinity of the base station radio which performs communications using the frequency employed immediately before, and the use permissible frequency stored in the mobile radio. Accordingly, it is possible to prevent the mistaken transmission of transmission frequency waves which are not permitted. In addition, switching of the reception frequencies is in the order of highest probability that reception will be possible, thus, it is possible to select the frequency with good efficiency.

Embodiment 2

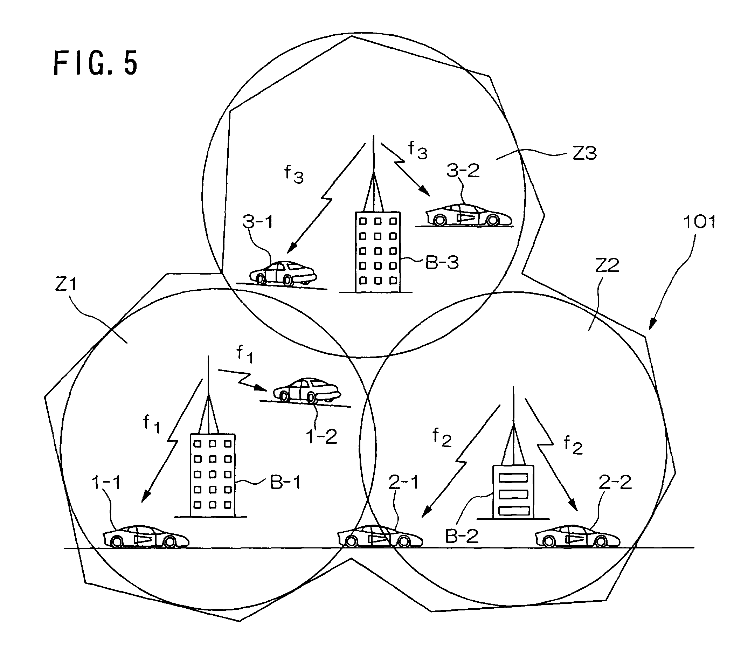

A second embodiment of the present invention will be explained below with reference to the figures. Figure 5 shows the structure of a radio server system according to a second embodiment of the present invention. In this figure, data communications service area 101 is divided into three zones, Z1, Z2, and Z3. Base station radios B-1, B-2 and B-3 are provided in each of these zones. Base station radios B-1~3 are connected to radio server A, not shown in the figure, via a cable communications circuit. Radio server A, not pictured, is connected to the Internet via a cable communications circuit. A single frequency is employed by each base station radio B-1, 2, 3. In this embodiment, the frequency used at base station radio B-1 is f1, at base station radio B-2 is f2, and at base station radio B-3 is f3.

The symbols 1-1, 1-2, 2-1, 2-2, 3-1, and 3-2 are mobile radios. Each mobile radio detects the frequency employed by the base station radio in each area. In other words, each mobile radio detects pilot data included in the transmission signal of the base station radio and fixes to this frequency. In the area which can be covered by each base station radio, data communication is carried out using only that frequency. The data is formed into packets such as ATM (Asynchronous Transfer Mode) at a wired circuit, and data is received in accordance with the packet header. Accordingly, the base station radios are constantly and continuously sending data.

There may be overlapping between some or all of each base station radio's zone. Figure 5 shows an example in which overlapping is present in part of the zones. Only the portion at the edge of the zone is overlapping. The reason for overlapping each of the base station radio zones in this way is to prevent points of discontinuity in the service area. It is preferable to provide this arrangement in the zone setting for each base station radio.

Data distribution to each of the mobile radios by the base station radio is carried out using packet distribution. The communication from the mobile radio to the base station radio employs a single frequency similar to the case of communication from the base station radio to the mobile radio. However, a transmission signal is sent from each mobile radio only when necessary. Thus, the transmission signal from the mobile radio becomes a burst signal. Data collision may occur when two or more mobile radios begin transmitting at the same time. However, this can be avoided by a method (ALOHA, etc.) in which the presence or absence of a collision can be know by waiting for the reply from the base station radio following transmission.

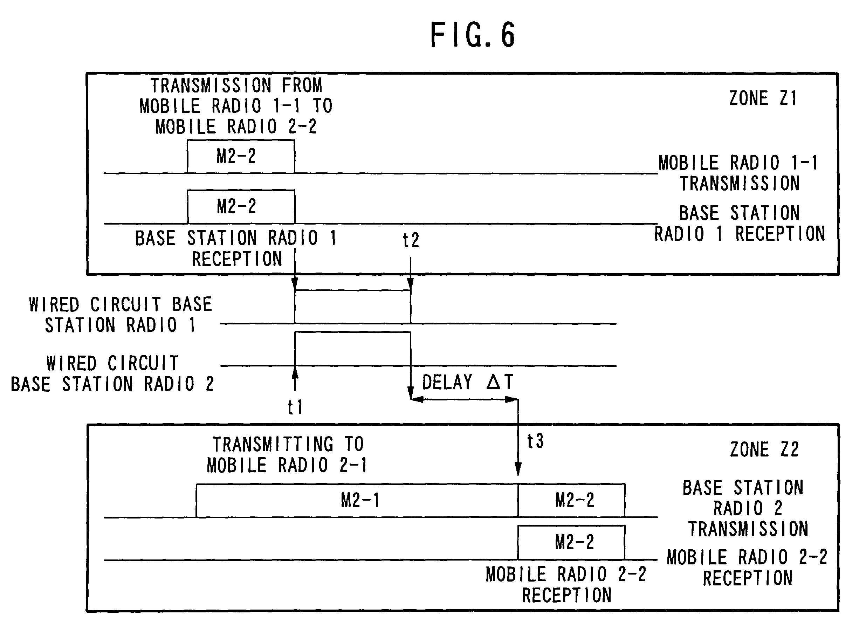

Because communications are not carried out in real time in the radio server system according to this embodiment of the present invention, a delay results in communications between base station radios. This condition will be explained with reference to Figure 6. In this figure, a mobile radio 1-1 located in zone Z1 where base station radio B-1 is provided sends data M2-2 to a mobile radio 2-2 which is moving within zone Z2 where base station radio B-2 is provided. When mobile radio 1-1 sends the data, bases station B-1 receives transmission data M2-2 from mobile radio 1-1, and sends the data to base station radio B-2 in zone 2 via wired circuit base station radios B-1,2 at a time t1.

The transmission of data M2-2 from wired circuit base station radio B1 to wired circuit base station radio B-2 concludes at time t2 in this case. However, since base station radio B-2 is in the process of transmitting data M2-1 to mobile radio 2-1, the data transmission from base station radio B-2 to mobile radio 2-2 is delayed for the duration of the time interval until transmission is concluded, i.e., by a time interval $\Delta t$, from t2 to t3.

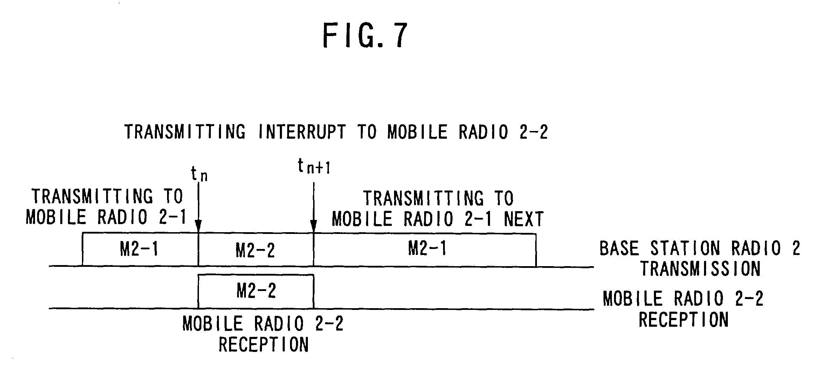

However, when sending data from the mobile radio in zone Z1 to the mobile radio in zone Z2 shown in Figure 5, even if there is ongoing transmission at base station radio B-2 to another mobile radio 2-1 as shown in Figure 6, it is possible to avoid a large delay when the amount of data is large with respect to the transmitting mobile radio as shown in Figure 7, by interrupting the transmission to mobile radio 2-2, where the data amount is small.

In the radio server system according to the embodiment of the present invention described above, a base station radio continuously transmits data between a plurality of base station radios provided in each of the zones and a plurality of mobile radios, and the mobile radios carry out data communication by transmitting burst signals to the base station radios. As a result, in a radio server system connected to the Internet via a radio server in which mobile radios are connected to base station radios, the neighboring zones for each base station radio are different. Moreover, communications are performed using a single frequency within one zone, with each mobile radio detecting the frequency used by the base station radio within each zone and carrying out communications with the base station radio at the detected frequency. Thus, two-way communications can be carried out without requiring a connection procedure, a reduction in the facility cost for the base station radio can be anticipated, and provision of the base station radio can be easily carried out.

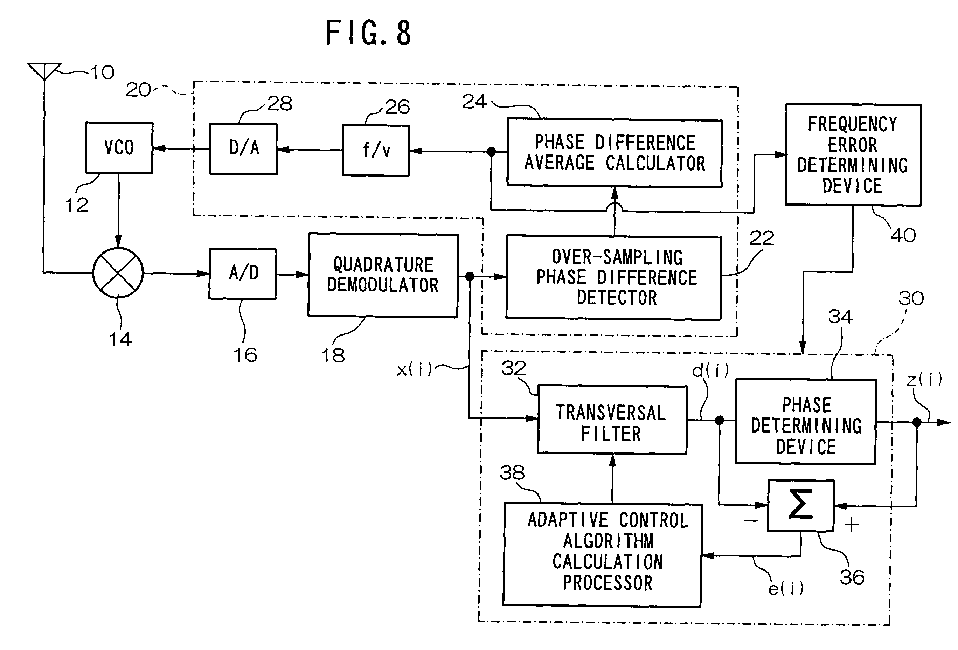

A first embodiment of the wireless communications device composing the mobile radio in the radio server system according to this embodiment of the present invention will now be explained with reference to Figures 8 through 14. Figure 8 shows the structure of the wireless communications device composing the mobile radio in the radio server system according to this embodiment. In this figure, the wireless communications device is provided with an antenna 10, a voltage control oscillator 12 for generating a carrier wave standard signal for converting a QPSK (Quadrature Phase Shift Keying) modulated signal received by antenna 10 to a base band signal, a multiplier 14, an A/D converter for converting the output from multiplier 14 to an analog/digital signal, and a quadrature demodulator 18 for quadrature demodulating the A/D converted base band signal into a in-phase component (I) and a quadrature component (Q).

The wireless communications device composing the mobile radio in the radio server system according to this embodiment is provided with an over-sampling phase difference detector 22 which over-samples the output from the quadrature demodulator, and detects the phase difference data within a time interval which is shorter than the symbol interval, this detection being carried out over a time interval in which several or more symbols, or two or more symbols, are input; a phase difference average calculator 24 which performs an averaging calculation on the phase difference data output from the over-sampling phase difference detector 22; a frequency/voltage converter 26 which converts the frequency error data for the carrier wave standard signal received from voltage control oscillator 12 which was output from phase difference average calculator 24 to a voltage value; and a D/A converter 28 which converts the signal output from frequency/voltage converter 26 from a digital to an analog signal.

Over-sampling phase difference detector 22, phase difference average calculator 24, frequency/voltage converter 26 and D/A converter 28 form frequency synchronizing control means 20. Frequency synchronizing control means 20 corrects the frequency of voltage controlled oscillator 12, which is the standard signal for performing frequency synchronization with the received signal using the average value obtained over the time interval during which several or more, or two or more, symbols of phase difference data of the signal received during a time interval shorter than the symbol interval, so that it falls within specific frequency error limits for the received signal. Frequency synchronizing control means 20 corresponds to the present invention's frequency synchronizing control means.

The wireless communications device composing the mobile radio of the radio server system according to the present invention's embodiment is provided with a phase compensating control means 30 for controlling with high accuracy the phase compensation of the demodulated output of quadrature demodulator 18. Phase compensating control means 30 is provided with a transversal filter 32 as an adaptive phase control filter; a phase determining device 34 for determining which phase interval symbol data that has been demodulated based on the output of transversal filter 32 is associated with; a subtractor 36 for subtracting the output of the transversal filter 32 from the output determined by phase determining device 34; and an adaptive control algorithm calculation processor 38 for determining the type coefficient of the transversal filter 32 so as to minimize the phase error data output from subtractor 36.

The adaptive control algorithm employed at adaptive control algorithm calculation processor 38 is an LMS (Least Mean Squares) algorithm in this embodiment. However, the present invention is not limited thereto, but rather, other algorithms, such as an RLS (Recursive Least Squares) algorithm, may be used.

The wireless communications device according to this embodiment is provided with a frequency error determining device 40 which uptakes the calculated output from phase difference average calculator 24 and, as a result of frequency synchronizing control by frequency synchronizing control means 20, determines whether or not the frequency error with respect to the received standard signal, which is the signal output by voltage control oscillator 12, is within a specific range in which phase compensation through adaptive phase control by phase compensating control means 30 is possible. In this embodiment, the phrase "the frequency error is.... within a specific range in which phase compensation through adaptive phase control by phase compensating control means 30 is possible" used here shall mean within $\pi/4$ during one cycle when converting to phase.

When, as a result of frequency synchronizing control by frequency synchronizing control means 20 according to frequency error determining device 40, phase compensating control means 30 determines that the frequency error with respect to the received standard signal, which is the signal output by voltage control oscillator 12, is within a specific range in which phase compensation through adaptive phase control by phase compensating control means 30 is possible, then phase compensating control means 30 carries out adaptive phase control of the demodulated output from quadrature demodulator 18 based on the determination output from frequency error determining device 40. Note that the response speed in frequency correction control by frequency synchronizing control means 20 is set to be slower than the response speed of adaptive phase control by phase compensating control means 30. As a result of this design, it is possible to render the control loop formed by frequency synchronizing control means 20 to be a narrow band.

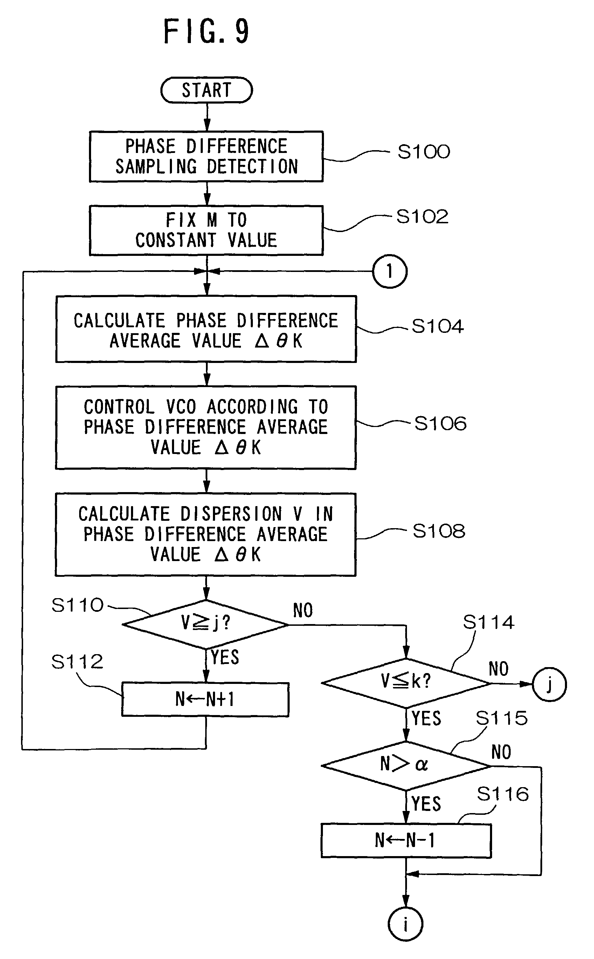

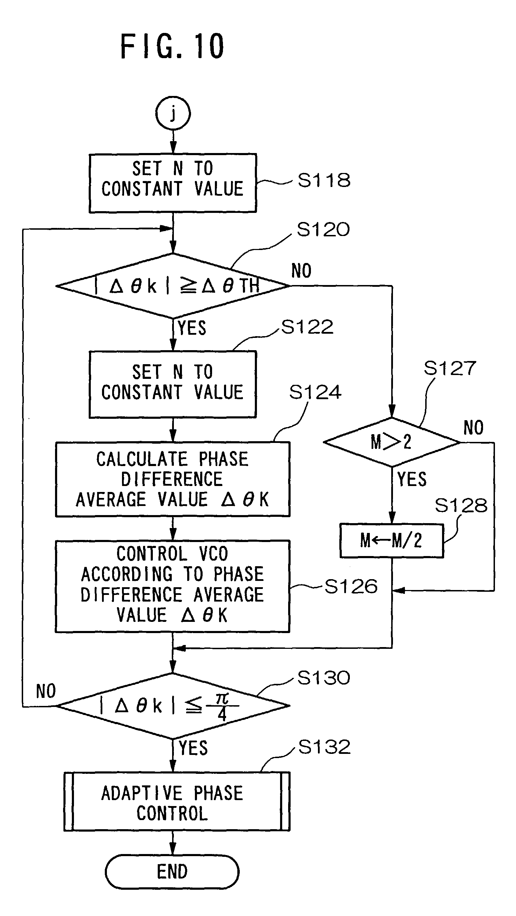

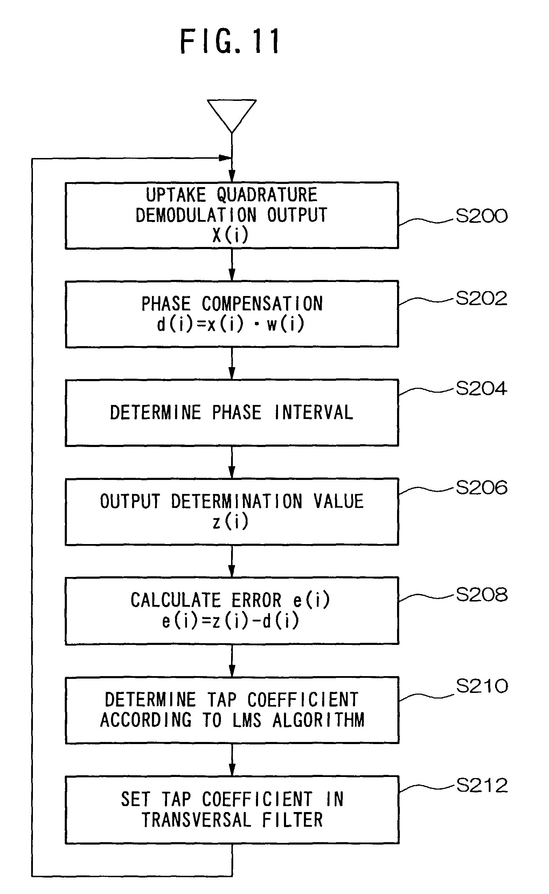

The operation of the wireless communications device according to an embodiment of the present invention having the structure as described above will now be explained with reference to Figures 9 through 13. Figures 9 and 10 show the control operation of frequency synchronizing control means 20. Figure 11 shows the control operation of phase compensating control means 30. When the desired signal is received by antenna 10, the received signal is multiplied at multiplier 14 by a carrier wave standard signal (frequency fc), which is the output of voltage control oscillator 12, and converted to a base band signal. This base band signal is A/D converted at A/D converter 16, and input to quadrature demodulator 18. The base band signal which has been converted to digital data is quadrature demodulated into an in-phase component (I component) and quadrature component (Q component).

Next, the frequency synchronizing control shown in Figures 9 and 10 is performed by frequency synchronizing control means 20. In step S100 in these figures, demodulated output x(i) taken up by quadrature demodulator 18 is over-sampled by over-sampling phase difference detector 22, and the phase difference data in a time interval which is shorter than the symbol interval is detected. Demodulated output x(i) is expressed by the following equation (1), where amplitude is rk, the phase of the modulated signal is $\phi$, the frequency modulation amount is $\Delta fk$, and T is the sampling interval.

$$x(i)= rk \cdot exp\{j(\phi+2\pi\Delta fkT)\} \tag{1}$$

Next, the phase difference average value $\Delta\theta k$ is calculated at phase difference average calculator 24 from the following equation (2).

$$\Delta\theta k= \frac{1}{N} \cdot \sum_{n=0}^{N-1} (an \cdot \phi/M+2\pi\Delta fnT/M)=2\pi\Delta fT/M \tag{2}$$

Where, M is the over-sampling number, N is the data number used in the average value calculation, and an is the transmission function after applying a filter.

In step S102, the value of the over-sampling number M in equation 2 is fixed to a constant value. Next, equation (2) is used at phase difference average calculator 24 to calculate the phase difference average value $\Delta\theta k$ over the time interval in which several or more, or two or more, symbols of the demodulated output are input (step S104). The amount of frequency change for phase difference average value $\Delta\theta k$ calculated at step S104, i.e., the frequency error $\Delta f$, is converted to a voltage value by frequency/voltage converter 26, and impressed on voltage control oscillator 12 via D/A converter 28. As a result, the frequency of the carrier wave standard signal output from voltage control oscillator 12 is corrected to eliminate frequency error $\Delta f$ (step S106).

In step S108, the variance V of the phase difference average value $\Delta\theta k$ which was calculated in step S104 through that point in time is calculated. In step S110, a determination is made as to whether or not variance V exceeds a set value j. This determination is made by examining whether or not the control loop which forms the frequency synchronizing control means 20 is in a stable state. If j it is determined that V$\geq$j, i.e., if it is determined that the control loop is unstable, then data number N in equation (2) is incremented by +1 in the following step S112, the program returns to step S104, and the processing in steps S104~108 is repeated. Since data variation or phase noise is large, so that the control loop is in an unstable state, this control is performed so that, by increasing data number N, the data appearance and noise are averaged, and the control loop can be moved into a stable state.

If a determination is made that V<j in step S110, then a determination is made as to whether or not V$\leq$k (j>k), i.e., whether or not the control loop has been freed from an unstable state and moved into a sufficiently stable state. k is the value of dispersion V of the phase difference average value $\Delta\theta k$ when the control loop is sufficiently stable. When a determination is made in step S114 that V$\leq$k, then a determination is made in step S115 as to whether or not N>$\alpha$ (where $\alpha$ is an optional integer). This determination is to avoid the situation in which the value of the phase difference average value $\Delta\theta k$ is dispersed when N=0. When N>$\alpha$, the procedure shifts to step S116, while when N$\leq$$\alpha$, the procedure shifts to step S104. When a determination is made that N>$\alpha$ in step S115, then data number N in equation (2) is decreased by -1 in step S116, the procedure returns to step S104, and the processing in steps S104~108 are repeated. Randomness increases and the probability of data appearance becomes equal when data number N becomes large. Thus, although the frequency error becomes small, the converging time becomes longer, so that data number N decreases.

When a decision is made in step S114 that k<V<j, i.e., when a decision is made that the control loop is in a state of suitable but not sufficient stability, processing shifts to step S118 in Figure 7. The value of data number N in equation 2 is fixed to a constant value in step S118, and a size comparison is made between the absolute value | $\Delta\theta k$ | of the phase difference average value $\Delta\theta k$ and a threshold value in the following step S120. Here, this threshold value $\Delta\theta TH$ is set so that $\Delta\theta TH>\pi/4M$. When a determination is made that | $\Delta\theta k$ |$\geq$$\Delta\theta TH$ in step S120, then the over-sampling number M in equation (2) is increased (step S122) and the procedure moves to step S124.

When a determination is made in step S120 that |$\Delta\theta k$|<$\Delta\theta TH$, a determination is then made as to whether or not over-sampling number M is M>2 in step S127. When M>2 in step S127, over-sampling number M is decreased to M/2. Thereafter, when M$\leq$2, the procedure shifts to step S130 without further modification. The reason why the value of over-sampling number M is increased or decreased according to a size comparison between the absolute value |$\Delta\theta k$| of phase difference average value $\Delta\theta k$ and the threshold value is because the accuracy of detecting the frequency error falls as phase difference average value $\Delta\theta k$, i.e., the frequency error $\Delta f$, becomes smaller. Thus, the drop in detection accuracy can be avoided by changing the value of the over-sampling number M in response to the result of the calculation of the left side of equation (2). The increase or decrease in the over-sampling number M corresponds to the increase or decrease in the sampling time. Because the first embodiment of the present invention is designed to adaptively control the increase or decrease in data number N (corresponding to sampling number) and over-sampling number M (corresponding to sampling time) in response to the size of the frequency error, an improvement in the accuracy of detecting the frequency error may be anticipated.

After increasing over-sampling number M in equation (2) in step S122, phase difference average value $\Delta\theta k$ is calculated in step S124 in the same manner as in steps S104, 106, and the frequency of the carrier wave standard signal is corrected and controlled at voltage control oscillator 12 based on this calculated phase difference average value $\Delta\theta k$ (step S126). After the processing in step S126 or stepS128, a determination is made by frequency error determining device 40 in step S130 as to whether or not $|\Delta\theta k|\leq\pi/4$, i.e., as to whether or not the frequency error $\Delta f$, i.e., the phase difference average value $|\Delta\theta k|$, is within a frequency error range in which it is possible to perform phase compensation through adaptive phase control by phase compensating control means 30 in accordance with frequency synchronizing control by frequency synchronizing control means 20.

When it is determined in step S130 that $|\Delta\theta k|\geq\pi/4$, the procedure returns to step S120, and the processing in steps S120~130 is repeated. When it is determined in step S130 that $|\Delta\theta k|\leq\pi/4$, then processing shifts to adaptive phase control by phase compensating control means 30 based on the output of the determination by frequency error determining device 40 (step S132). When it is detected here by frequency synchronizing control means 20 that the frequency error with respect to the standard carrier wave signal of voltage control oscillator 12 of the received signal is within a specific range (i.e., within $\pi/4$ following conversion to phase), then it is acceptable to initiate communication to the transmission side based on the frequency at that time. As a result of this design, it is possible to carry out highly accurate phase compensation of the received signal on the transmitting side. Moreover, when it is first detected by frequency synchronizing control means 20 that the aforementioned frequency error is within the aforementioned specific range, the frequency of the standard carrier wave signal at that time may be used during the next reception. As a result of this design, the time required to synchronize frequencies during the next reception can be reduced.

Adaptive phase control by phase compensating control means 30 will now be explained. In step 200 in Figure 11, the demodulated output x(i) from quadrature demodulator 18 is input to transversal filter 32 which forms phase compensating control means 30. Phase compensation of demodulated output x(i) is carried out based on the filter characteristics determined by the filter coefficient set by adaptive control algorithm calculation processor 38 (step S202). In other words, the output of transversal filter 32 may be expressed by the following, where w(i) indicates the filter characteristics and d(i) indicates the output of transversal filter 32.

$$d(i)=x(i) \cdot w(i) \qquad (3)$$

Setting demodulated output x(i) to $x(i)=\exp\{j(ak+2\pi\Delta fT)\}$, the phase component due to modulation to $\exp(jak)$, and the phase error in the demodulated output to $e(I)=\exp(j2\pi\Delta fT)$, then d(i) of transversal filter 32 becomes as follows when the filter characteristics of transversal filter 32 are set to $w(i)=\exp(-j2\pi\Delta fT)$ by adaptive control algorithm calculation processor 38.

$$\begin{aligned}d(i) &=x(i) \cdot w(i) \\ &=\exp\{j(ak+2\pi\Delta fT)\} \cdot \exp(-j2\pi\Delta fT) \\ &=\exp(jak)\end{aligned} \qquad (4)$$

The phase error e(i) is completely eliminated, and only the original signal $\exp(jak)$ is extracted.

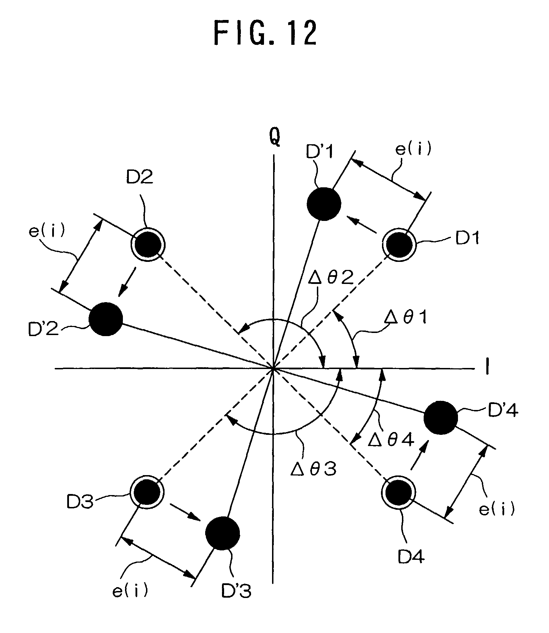

In this case, phase difference data $\Delta\theta k$, which is the difference in neighboring phase data for a phase series $\{\theta k\}$ which is obtained by transversal filter 32, becomes $\Delta\theta k(k=1\sim4)=\pi/4$ (first quadrant), $3\pi/4$ (second quadrant), $-3\pi/4$ (third quadrant), and $-\pi/4$ (fourth quadrant) where the I axis in the orthogonal coordinate system on the I-Q axis shown in Figure 12 is taken as the basis, when demodulating the received signal which was modulated using 4-phase QPSK modulation. The symbol data which is specified in a demodulated dibit coincides with standard data D1, D2, D3, D4 in one of the quadrant in the I-Q axis orthogonal coordinate system.

However, the phase error is in fact not completely eliminated by transversal filter 32, so that an error e(i) is included in the output from transversal filter 32. In step S204, phase determining device 34 performs a phase interval determination to determine the quadrant in the I-Q axes orthogonal coordinate system to which the phase data obtained from the output d(i) of transversal filter 32 belongs. Phase determining device 34 determines the quadrant in the I-Q orthogonal coordinate system to which the input phase difference data $\Delta\theta$ belongs, and outputs the result as data that is equivalent to the symbol data in which the standard data of the quadrant to which phase difference data $\Delta\theta k$ belongs was input (step S206). The output of phase determining device 34 is designated as z(i).

Next, in step S208, the phase error e(i) is calculated by subtractor 36 using the following equation (5).

$$e(i) =z(i)-d(i) \qquad (5)$$

Next, phase error e(i) is taken up at adaptive control algorithm calculation processor 38, and calculations are carried out based on a LMS algorithm. A filter coefficient is determined for transversal filter 32 so that the phase error difference e(i) is minimized, with this filter coefficient being set in transversal filter 32 (steps S210,212).

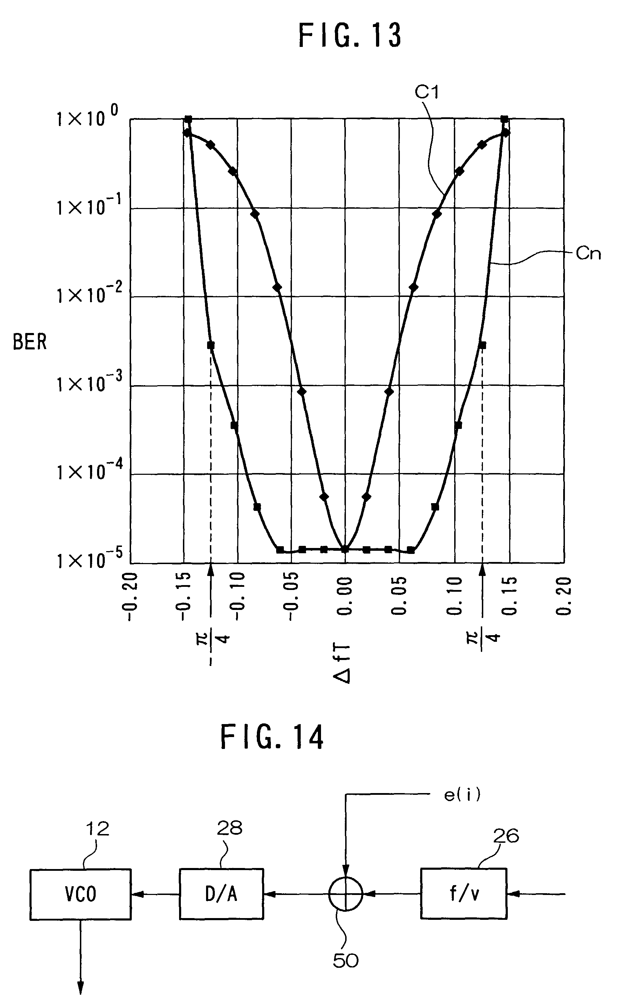

As a result, phase error e(i) is subjected to highly accurate phase compensation within $\pi/4$ as an absolute value as shown in Figure 13. Figure 13 shows the frequency error characteristics. Frequency error $\Delta fT$ is plotted on the horizontal axis, while the bit error rate (BER) is plotted on the vertical axis. In this figure, curve C1 shows the frequency error characteristics obtained as a result of phase compensation by phase compensating control means 30. Curve Cn shows the frequency error range (phase error range) in which phase compensation by phase compensating control means 30 is possible. When frequency error $\Delta fT$ is $\Delta fT=0.125$ in this figure, it becomes $\pi/4$ when converting to a phase error.

By employing the wireless communications device comprising the mobile radio in a radio server system according to this embodiment, for a wireless communications device which performs frequency synchronization based on phase difference data for signals received during a time interval which is shorter than the symbol interval, it is possible to correct the frequency of the standard signal for performing frequency synchronization by the frequency synchronizing control means using an average value obtained over the time interval during which several or more symbols, or two or more symbols, of phase difference data are input. As a result, frequency synchronization can be carried out without using a high-accuracy frequency synchronization oscillator, even when a $\pi/4$ or greater phase revolution per cycle interval has occurred.

The frequency of the standard signal for performing frequency synchronization with the received signal is corrected so as to fall within a specific frequency error limit for the received signal, using an average value obtained over the time interval in which several or more symbols, or two or more symbols, of phase difference data for the received signal are input by the frequency synchronization control means. As a result, frequency synchronization within frequency error limits for which phase compensation by adaptive phase control is possible is performed. Adaptive phase control is performed for the demodulated received signal by adaptive compensating control means at the point in time where frequency synchronization was accomplished. As a result, frequency synchronization errors due to frequency offsetting can be decreased.

Since the loop for frequency synchronization can be made to be a narrow zone, phase fluctuation does not occur. As a result, the phase compensating control means operates in a stable manner, and highly accurate phase control becomes possible. Accordingly, an improvement in the reliability of the demodulated data can be anticipated.

Embodiment 3

The design of main components of the wireless communications device composing the mobile radio in the wireless communications system according to a third embodiment of the present invention is shown in Figure 14. The design of the wireless communications device according to this embodiment differs from the wireless communications device shown in Figure 8 in that correction is performed by adder 50 adding phase error e(i), which is the output from subtractor 36 composing phase compensating control means 30, to the output from frequency/voltage converter 26 of frequency synchronization controlling means 20, and the control data for synchronizing and controlling this corrected frequency is used as the control signal for voltage control oscillator 12. The remainder of the design of the wireless communications device according to this embodiment is the same as that shown in Figure 8. Accordingly, any redundant explanation will be omitted.

The phase compensation needed for frequency synchronization can be carried out highly accurately through the wireless communications device composing a mobile radio in a radio server system according to the present's embodiment. In this embodiment, it is acceptable to begin communications to the transmitting side after setting the frequency of the carrier wave standard signal of the voltage control oscillating device using the aforementioned corrected control data. As a result of this design, phase compensation of the received signal can be carried out highly accurately on the transmitting side.

In a wireless communications device composing a mobile radio in a radio server system according to the present's embodiment, the frequency of the carrier wave standard signal of the voltage control oscillating device set using the aforementioned corrected control data may be used during the next reception. As a result of this design, phase compensation of the received signal during the next reception can be carried out highly accurately.

Embodiment 4

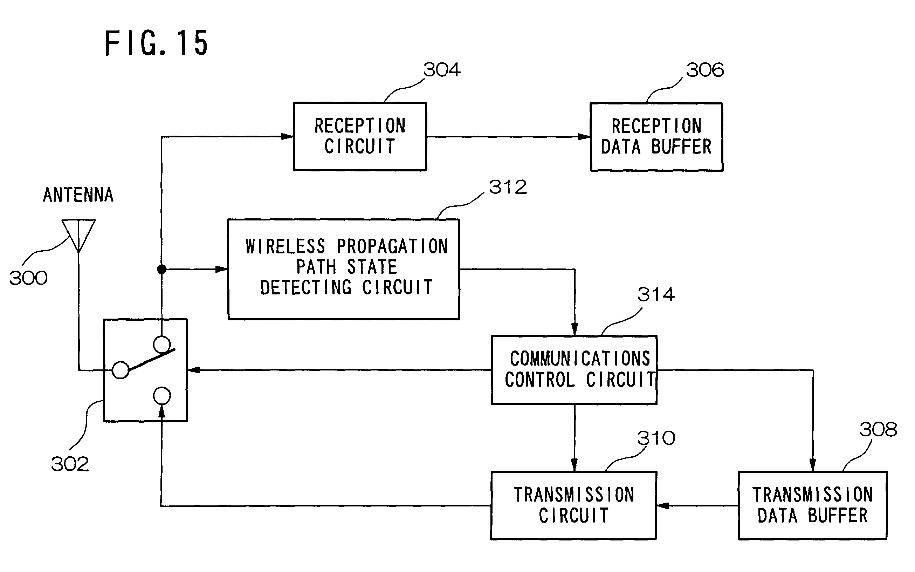

A wireless communications device for composing a mobile radio in a radio server system according to a forth embodiment of the present invention will now be explained in detail with reference to Figures 15 through 21. Figure 15 shows the structure of a wireless communications device for a mobile radio in a radio server system for carrying out data communications according to this embodiment. In this figure, the mobile radio in this radio server system is provided with an antenna 300; a switching switch 302 for switching between the transmitting and receiving sides in the mobile radio; a reception circuit 304 for demodulating the signal received by antenna 300 and taking up the received data; and a received signal data buffer 306 for storing the received data output from receiving circuit 304.

The mobile radio in the radio server system is provided with a transmission buffer 308 for storing transmission data; transmitting circuit 310 for modulating the transmission data read out from transmission data buffer 308 to digital using a specific modulation method; a wireless propagation path state detecting circuit 312 for detecting the state of the wireless propagation path communicated from the moving speed of the mobile radio and the signal received by antenna 300; and a communications control circuit 314 for controlling the transmitting circuit based on the detection output from wireless propagation path state detecting circuit 312.

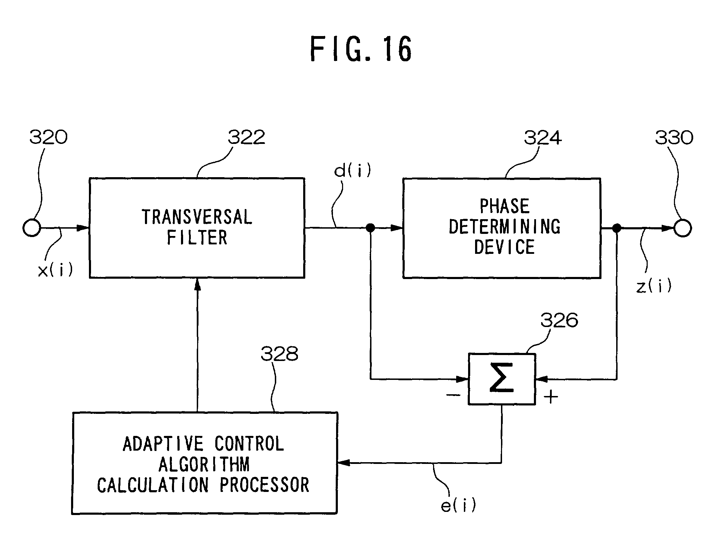

Before explaining the specific operation of the mobile radio in the above-described radio server system, the principle for detecting the wireless propagation path state using propagation path state detecting circuit 312 will be explained with reference to Figures 16 through 18, and 11 through 13. Figure 16 shows the structure of the equalizer for carrying out phase compensation of frequency synchronization control. In this figure, the equalizer is provided with a transversal filter 322 employed as an adaptive phase control filter; a phase determining device 324 for determining the phase interval to which the symbol data modulated based on the output for transversal filter 322 belongs; a subtractor 326 for subtracting the output of transversal filter 322 from the determined output of phase determining device 324; and an adaptive control algorithm calculation processor 328 for determining the tap coefficient of transversal filter 322 so that the phase error data output from subtractor 326 is minimized.

The adaptive control algorithm used in adaptive control algorithm calculation processor 322 is a LMS (Least Mean Squares) algorithm in this embodiment, however, the present invention is not limited thereto. For example, an RLS (Recursive Least Squares) algorithm may also be used an adaptive control algorithm.

Adaptive phase control by an equalizer of the above-described structure was already explained using Figures 11 through 13. Accordingly, explanation which is redundant is omitted here.

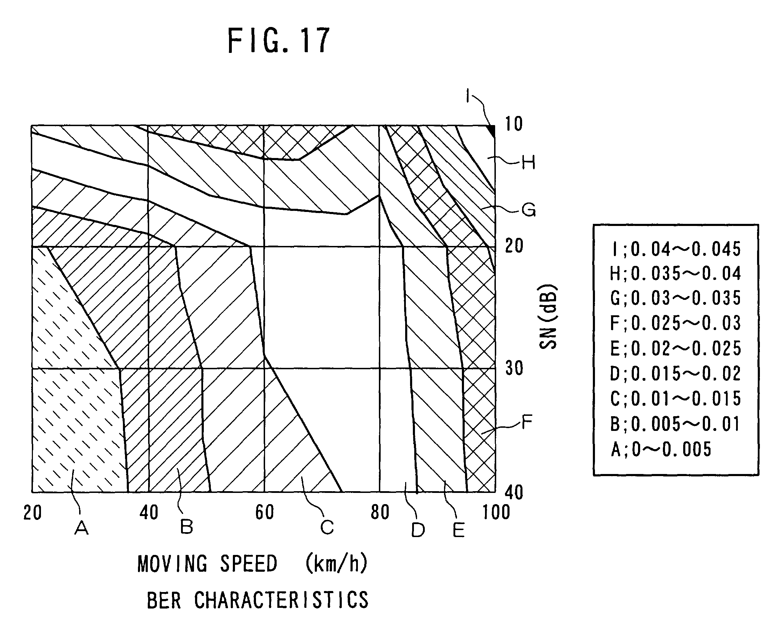

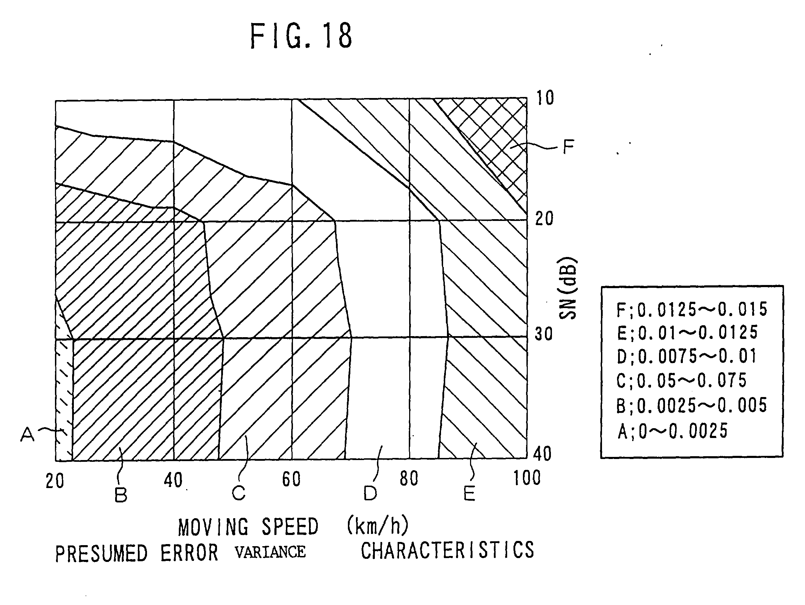

In phase compensation control by the equalizer described above, the difference between the output of phase determining device 324 and the output obtained by transversal filter 322 through the filter characteristics set using the LMS algorithm used at adaptive control algorithm calculation processor 328, i.e., the function shown in Figures 17 and 18 which exists between estimation error e(i) dispersion in phase compensation and the bit error rate (BER) of the demodulated output, was newly examined by the inventors. The bit error rate (BER) characteristics of the demodulated output according to a simulation are shown in Figure 17, while the presumed error characteristics of phase compensation according to a simulation are shown in Figure 18. In these figures, the moving speed of the mobile radio is shown on the horizontal axis, while the S/N ratio for the signal received from the base station radio is shown on the vertical axis. The regions A~I in Figure 17 show the distribution of the bit error rate for the demodulated output.

In Figure 17, the bit error rate is 0-0.005 for region A, 0.005~0.01 for region B, 0.01~0.015 for region C, 0.015~0.02 for region D, 0.02~0.025 for region E, 0.025~0.03 for region F, 0.03~0.035 for region G, 0.035~0.04 for region H, and 0.04~0.045 for region I. Regions A~F in Figure 18 show the distribution of presumed error e(i) dispersion. In Figure 18, the dispersion in presumed error e(i) is 0~0.0025 in region A, 0.0025~0.005 in region B, 0.005~0.0075 in region C, 0.0075~0.01 in region D, 0.01~0.0125 in region E, and 0.0125~0.015 in region F.

As is clear from Figures 17 and 18, a correlation is obtained wherein the bite error rate (BER) of the demodulated output and the dispersion of the presumed error e(i) become larger in proportion to the S/N ratio of the signal received from the base station radio and the Doppler frequency (the moving speed of the mobile radio) under Rayleigh Flat Fading. This means that by using the dispersion of the presumed error e(i) in phase compensation, it is possible to know the wireless propagation path characteristics without depending only on such electric field strengths as mobile speed, multipass phasing or the S/N ratio.

Accordingly, in this invention, communications are carried out adaptively after grasping the state of the wireless propagation path i.e., the radio wave state, in which communications are carried out by focusing on the correlation between the variance in the presumed error e(i) and the bit error rate (BER) of demodulated output.

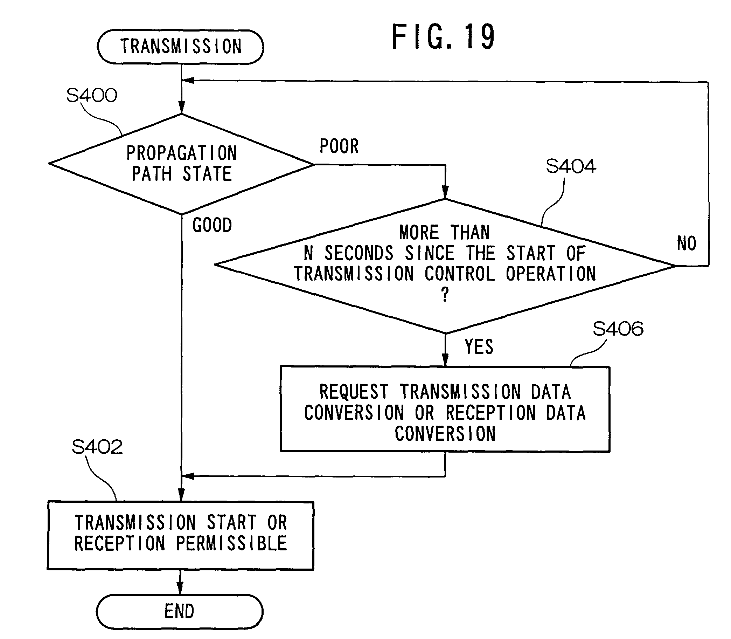

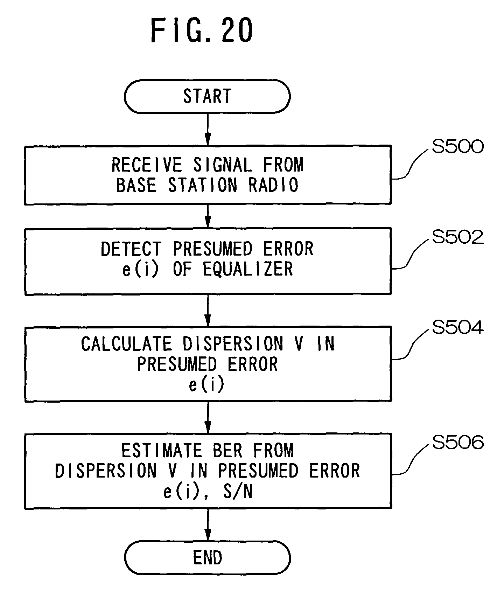

Transmission control in the wireless communications device forming the mobile radio in the wireless communications system according to this embodiment will now be explained with reference to Figures 19 through 21. Figure 19 shows transmission control operation of the communications control circuit 314 shown in Figure 15, while Figure 20 shows the detection operation by wireless propagation path state detecting circuit 312.

In Figure 19, when transmission control is initiated at communications control circuit 314, a determination is made as to whether or not the state of wireless propagation path is good based on the detection output from wireless propagation path state detecting circuit 312 (step S400). When it is determined that the wireless propagation path state is good in step S400, the transmission operation is initiated or reception is permitted in step S402.

In contrast, when it is determined that the wireless propagation path state is poor in step S400, the procedure remains in stand-by until a specific amount of time has passed since the transmission control operation was initiated (step S404,400). Once the specific amount of time has elapsed, a transmission data conversion request or a reception data conversion request is made (step S406), and the procedure shifts to step S402. A transmission data conversion request or a reception data conversion request in step S406 means that the base station radio is notified to send the data two times or more, or to send data of an increased correction capacity by increasing the degree of redundancy. In other words, when the timing for a transmitted or received signal is not received within a fixed time period, the transmission method is not determined consultatively. Namely, communication is carried out adaptively without setting the error correction method, the selection of the redundancy rate, correction rate and data multiplex number, or the control of time diversity in the system.

In this way, the mobile radio in the radio server system according to the present embodiment carries out communications without using waveform equalization technology. Transmission with good efficiency can be carried out by reducing the number of retransmissions due to auto repeat requests (ARQ). Communications control is carried out so that the redundancy in the data sent from the base station radio is adaptively changed.

The mobile radio of the present embodiment's radio server system is not provided with special physical conditions to obtain information from the outside, i.e., such as by attaching an external sensor for detecting the mobile radio's speed using such interval characteristics as space diversity or a directional antenna. As a result, the mobile radio can be made smaller in size, less expensive, and more energy efficient.

Next, the operation to detect the wireless propagation path state by wireless propagation path state detecting circuit 312 will be explained. In Figure 20, a signal from a base station radio is first received (step S500).

Presumed error e(i) of phase compensation of the equalizer (not shown) for performing phase compensation is calculated in step S502. In step S504, the dispersion V in presumed error e(i) of phase compensation is calculated. Next, referencing a table showing the correlation between the dispersion in presumed error e(i) and bite error rate (BER), the bit error rate (BER) in the wireless propagation path for communicating with the base station radio is estimated from dispersion V in the presumed error e(i) of phase compensation and the S/N ratio of the signal received in steps S500,502,504. As a result, when wave distortions such as a delay wave occurs due to frequency selective phasing, even when a sufficient electric field strength is obtained, and there is an increase in the bit error rate, it is possible to detect a noise component, such as interference from a neighboring channel, which could not be determined with only the electric field strength.

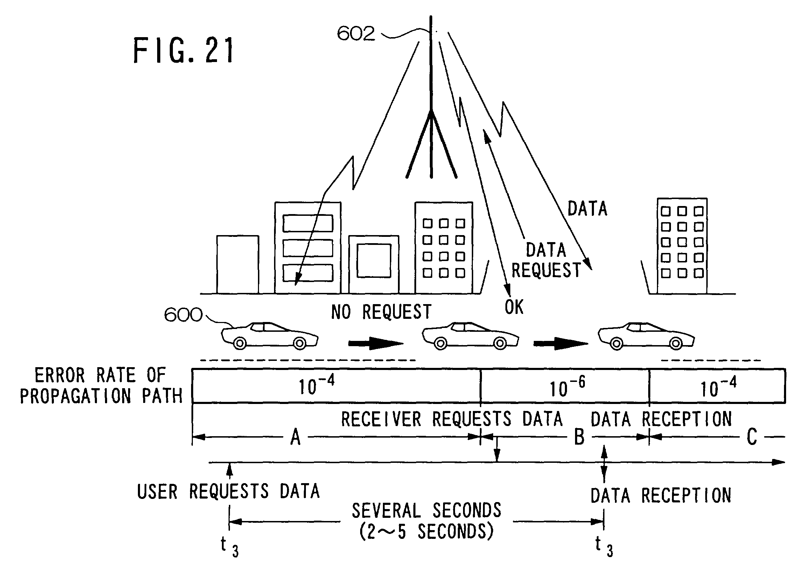

A concrete example of the communication control operation of the wireless communications device forming the mobile radio in the radio sewer system shown in Figure 19 will now be explained with reference to Figure 21. This figure shows data communications between an automobile 600 equipped with a mobile radio and a base station radio 602 operating in a city. Zone A is a wireless propagation path in which the state of the wireless propagation path is poor due to the presence of hindering objects such as buildings or the like. Zone B is a wireless propagation path in which the state of the wireless propagation path is good having without much traffic. Like Zone A, Zone C is a wireless propagation path in which the state of the wireless propagation path is poor due to the presence of hindering objects such as buildings or the like. The bit error rates for each path are as shown in the figure. Note that the time required for data transmission or reception between the mobile radio and base station radio 602 is approximately 200 msec.

Under these conditions, the operator of the mobile radio makes a request to the base station radio for data transmission at time t1 once automobile 600 enters Zone A. Although this request is received at the mobile radio in this case, a determination is made by wireless propagation path state detecting circuit 312 that the state of the wireless propagation path in Zone A is poor. Accordingly, the transmission request is not immediately carried out. Rather, once the transmission propagation path state has remained poor for a specific continuous period of time since the transmission control operation was initiated, a request is made to base station radio 602 to send the data a plurality of times, or to send the data after converting it to high correction capacity data by increasing the redundancy.

Alternatively, automobile 600 equipped with the mobile radio enters Zone B in which the wireless propagation path state is good at time t2, so that the transmission propagation path state does not remain poor for a specific continuous period of time since the transmission control operation was initiated. When this occurs, it becomes possible for the mobile radio to initiate transmission or received data, and a request for data transmission is made to base station radio 602. At time t3, data is received by the base station radio.

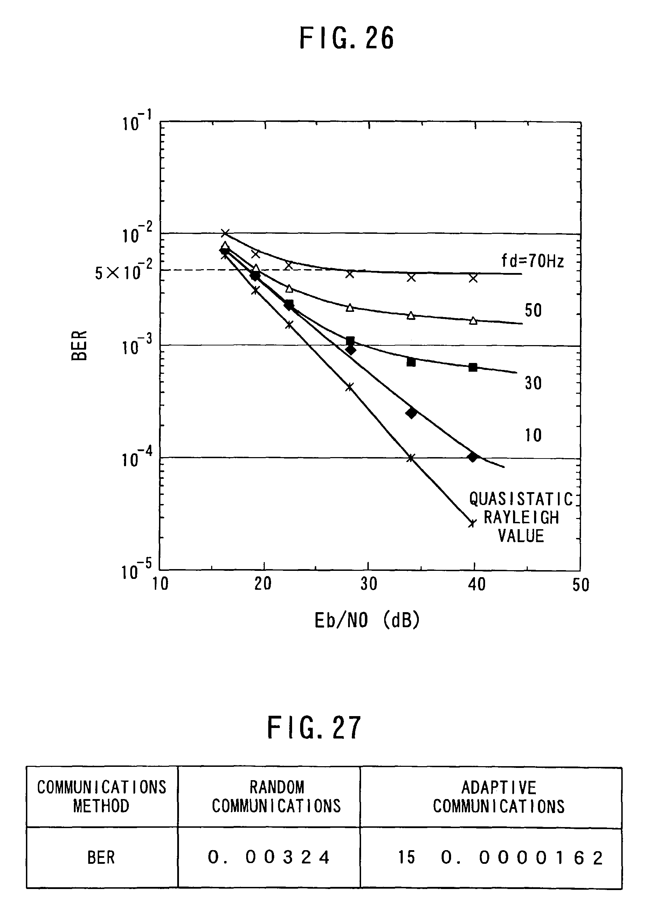

In reality, the speed of the mobile radio is variable. Figure 27 shows a comparison between the bit error rate when adaptive communication is carried out so as to begin communications when the estimated error falls below a given threshold, and the bit error rate when randomly beginning communications while moving, without carrying out adaptive communications in this way.

As is clear from the figure, it may be understood that the bit error rate becomes extremely low when adaptively carrying out communications such as performed by the mobile radio in a radio server system according to the embodiments of the present invention.

By employing the wireless communications device composing the mobile radio in the radio server system according this embodiment as the mobile radio in a radio server system which connects to the Internet via a radio server in which mobile radios are connected to a base station radio by means of data communications, it is possible to detect the wireless propagation path state for carrying out communications using a wireless propagation path state detecting means, and to carry out adaptive communications control by a communications control means in accordance with the wireless propagation path state detected by the wireless propagation path state detecting means. As a result, processing involving numerous and complicated calculations are not performed in the mobile radio of a radio server system which carries out data communications, and it is possible to maintain a high transmission efficiency. In other words, this embodiment does not require processing involving complicated and numerous calculations such as when carrying out non-linear equalization to obtain inverse communication characteristics of communication characteristics expressing the characteristics of the wireless propagation path. In addition, there is a reduction in the generation of ARQ, and it is possible to avoid transmission collisions between mobile radios. As a result, the radio server system can be operated in a stable manner.

The bit error rate is fundamentally reduced by means of a wireless communications device for forming a mobile radio in a radio sewer system according to the present embodiment. As a result, coding correction with little redundancy can be employed so that a high transmission efficiency can be maintained. Moreover, because the bit error rate is low, the number or retransmissions due to auto repeat requests (ARQ) can be reduced. Thus, a high through-put can be maintained.

The characteristics of a wireless propagation path can be understood in advance by employing the fourth embodiments's wireless communications device forming the mobile radio in a radio server system. As a result, control can be performed in which the data is sent and received after being multiplexed in advance. In other words, it is possible to reduce the communications time required for the communications procedure as compared to a conventional communications control method which relies on a procedure in which the auto repeat request (ARQ) is performed based on the results of data transmission each time.

By employing a wireless communications device composing the mobile radio in a radio server system according to this embodiment, communications control is carried out by detecting a noise component, such as interference from neighboring channels, which could not be determined with only the electric field strength, in the case where a wave distortion such as a delay wave occurs due to frequency selective phasing so that the bit error rate increases, even when a sufficient electric field strength is obtained. As a result, effective functioning is also achieved in regard to protocols such as handover, etc.

The wireless communications device forming the mobile radio in the radio server system according to this embodiment is designed to detect change characteristics in the wireless propagation path accompanying changes in the surrounding environment, i.e., the S/N ratio or the moving speed of the mobile radio, based on the received signal. Thus, it is possible to perform communications control with a simple structure, without requiring speed sensors or the like. Accordingly, a wireless communications device which does not require external sensors, and is smaller in size, uses less energy and costs less may be anticipated.

Embodiment 5

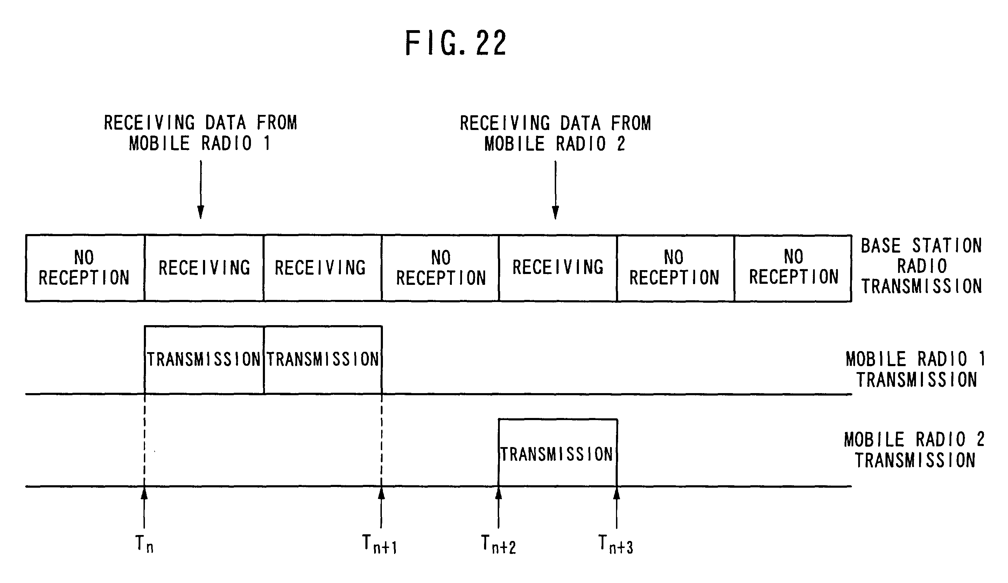

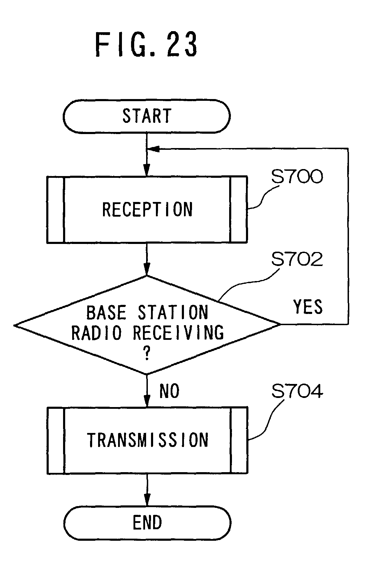

Transmission control in the mobile radio in a two-cycle symplex operation method radio server system according to a fifth embodiment of the present invention will be explained with reference to Figures 22 and 23. Figure 22 is a sequence diagram showing the operation of transmission control in the mobile radio. Figure 23 is a flow chart showing the processing content of transmission control in each mobile radio. As shown in Figure 22, each mobile radio begins transmission of a burst signal when other mobile radios are not transmitting to the base station radio based on the information included in the packet received from the base station radio. For example, mobile radio 1 detects that other mobile radios are not transmitting based on the information included in the packet received from the base station radio. At time Tn, mobile radio 1 begins burst signal transmission, and continues to transmit to the base station radio until time Tn+1. Similarly, mobile radio 2 detects that other mobile radios are not transmitting to the base station radio based on the information included in the packet received from the base station radio. At time Tn+2, mobile radio 2 begins transmitting a burst signal, and continues the transmission until time Tn+3.

When a packet is received from the base station radio at each mobile radio as shown in Figure 23 (step S700), the reception state of the base station radio is detected from the information included in the received packet, and a determination is made as to whether or not the base station radio is in a reception state (step S702). In other words, a determination is made as to whether or not the base station radio is receiving burst signals from other mobile radios. When this determination is positive, the procedure returns to step S700, and the same processing is repeated. Conversely, when the decision in step S702 is negative, i.e., the base station radio is not receiving a burst signal from other mobile radios (other mobile radios are not transmitting), then a burst signal is transmitted to the base station radio (step S704).

By employing a two-cycle symplex operation method in the radio server system according to this embodiment, it is possible to carry out data communications in packet units with good efficiency.

Next, an explanation will be made of the propagation frequency taking into consideration the moving speed of the mobile radio and the symbol cycle used in communications between the mobile radio and the base station radio in the present invention's radio server system.

A wireless communications system is premised on a connectionless digital radio server system. This is because this radio server system presumes an Internet connection. The Internet protocol (IP) which is used in the Internet is basically a connectionless protocol. Therefore, by creating a connectionless radio server system, low layer protocol compatibility is improved.

When forming a connectionless wireless network in a radio server system, each base station radio sends the same data to the mobile radios. When the mobile radio which is to receive this data is not within the zone for that base station radio's communication area, then this communications between the base station radio and a mobile radio not within its zone is wasted.

In order to eliminate this waste, the zone radius of each base station radio may be expanded. As a result, the number of base station radios per unit area can be reduced, thereby eliminating wasted communications. However, in this case, a problem results in that the bit error rate (BER) in communications between the base station radio and the mobile radio becomes high due to multiplex delay waves from multipath fading.

Reception data errors due to multiplex delay waves become continuous burst errors. Accordingly, it is not possible to perform error correction using error correction codes included in the transmission data. The communications protocol employs an ARQ (Auto Repeat Request) for requesting retransmission when data which cannot be corrected is received. However, when an ARQ is generated, it results in the resending of the same data, causing the frequency utilization efficiency to fall. Thus, it is extremely important to reduce the effect from multiplex delay waves in multipath fading.

Multipath fading refers to the situation where a plurality of carrier wave passes exist between the base station radio and the mobile radio, so that, as a result, the signal sent from the base station radio or the mobile station is received at the mobile radio or the base station radio as a plurality of signals having a time delay. Multipathing results when, in addition to direct waves, there are waves present which have been reflected by buildings or mountains.

If the signal time delay due to multipass (i.e., delay time difference) is small during signal reception, it should be possible to restrain the BER, i.e. the multiplex delay wave, to a low level. However, in general, the wider the zone radius becomes, the larger is the delay time difference due to multipass. Thus, when the zone radius has been widened, it is no longer possible to ignore the effect of the multiplex delay wave due to multipass phasing. In the city in particular, due to the presence of multiple buildings, the effect of this multiplex delay wave from multipass phasing when the zone radius has been widened is serious.

As a method to resolve this effect, a directional antenna, such as a tilt antenna, may be provided to the base station radio. As a result, the base station radio zone matches the land shape, so that the delay multiplex wave from multipass phasing can be prevented.

However, when preventing multiplex delay waves through antenna directionality, it becomes necessary to adjust each base station radio, causing the cost of the radio server system to increase.

Therefore, in this radio sewer system, an approach is taken using the symbol cycle for digital modulation during communications between a base station radio and a mobile radio. As a result, the effect of multiplex wave delay is reduced.

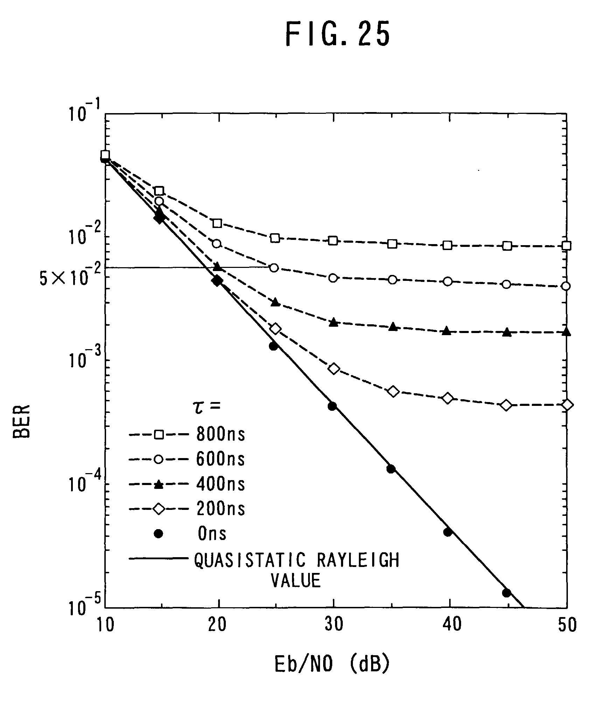

Figure 25 shows the simulated results for BER characteristics relating to the multipath fading-ray model when performing communications at a transmission speed of 384 [kbit/s] using π/4- DQPSK Quadratur Phase Shifting Keying for digital modulation. In the figure, the squares indicate the relationship between the BER and signal noise (Eb/N0) at a delay time difference of 800 [ns]. Similarly, the circles, triangles and diamonds each indicated the relationship between the BER and the signal noise (Eb/NO) at a delay time difference of 600 [ns], 400 [ns] and 200 [ns], respectively.

The transmission speed and the band width needed to carry out wireless communications have a 1-to-1 relationship. Accordingly, the band width for realizing a transmission speed of 384 [kbit/s] is 384 [kHz].

In addition, the symbol frequency is 1/2 of the band width. Accordingly, for a band width of 384 [kHz], the symbol rate is 192 [kHz].

The symbol cycle is the inverse of the symbol rate (symbol cycle [s]=1/symbol rate [Hz]). Thus, when the symbol rate is 192 [kHz], the symbol cycle is approximately 5 [μs].

When the symbol cycle is varied, the BER characteristics due to the delay detection wave in this symbol cycle become the result obtained when each of the delay time differences in Figure 25 have been substituted with a value proportional to the change in the symbol cycle.

Using the aforementioned relationship, the following is the result when obtaining the delay time difference corresponding to Figure 25, at symbol rates of 192 [kHz], 19.2 [kHz], 10 [kHz], and 4.8 [kHz].

| transmission speed (kbits) | symbol rate (kHz) | symbol cycle (μs) | delay time difference (μs) | | | |
|---|---|---|---|---|---|---|
| | | | □ | ○ | △ | ◊ |
| 384 | 192 | 5 | 0.8 | 0.6 | 0.4 | 0.2 |
| 38.4 | 19.2 | 52 | 8 | 6 | 4 | 2 |
| 20 | 10 | 100 | 16 | 12 | 8 | 4 |
| 9.6 | 4.8 | 208 | 32 | 24 | 16 | 8 |

By reducing the delay time as described above the effect of multiplex delay waves due to multipass phasing can be reduced. Further, from Figure 25 and the above table it may be understood that the larger the symbol cycle, the more the BER can be restrained to a low level, even if the delay time is large.

In order to carry out data communications which are highly reliable in a radio server system, it is necessary that the BER before correction be $5\times10^{-3}$ or less.

Based on the results of measurements of delay time differences (delay profile), excluding unusual land forms such as basins and the like, a delay time difference of about 5~10 [μs] occurs (see Mitsuhiko Mizuno, Measurement of Multipath Delay Profiles in Urban and Mountainous Areas, Shingakugiho, AP87-77, pp. 19-24, 1987, etc. Thus it is necessary that the BER be $5\times10^{-3}$ or less, even when the delay time difference is around 10[μs].

The zone radius can be increased by using a symbol frequency having the following conditions in the radio server system:

1) the BER before error correction is $5\times10^{-3}$ or less
2) the above condition is satisfied even when the delay time difference is about 10[μs]
Accordingly, the symbol cycle satisfying these conditions can be determined using Figure 25 and the above table.

It may be understood from Figure 25 that, in the case of a symbol cycle of 5 [μs] (transmission speed: 384 [kbit/s]), the permissible delay time so that the BER is $5\times10^{-3}$ or less is 0.6 [μs] (○).

In the above table, the symbol cycle at which the delay time corresponding to (○) is 10 [μm] or more is 100 [μs].

Therefore, by setting the symbol cycle for digital modulation to 100 [μs] or more, a communications system is achieved in which the BER before error correction is $5\times10^{-3}$ or less, even when the delay time difference is around 10 [μs]. In other words, by setting the symbol cycle to be 100 [μs] or more, the zone radius of each base station radio in a connectionless communications system can be widened, and the impact of multiplexing delay waves when the zone radius is widened can be restrained to be within permissible limits.

Note that as may be understood from the above table, when the symbol cycle is increased, the transmission speed becomes slower. However, this radio sewer system is a system premised on data, and not voice, transmissions. Where E-mail or the like is the target of transmission, the quantity of data transmitted is not very great. Thus, the effect of a slower transmission speed on the radio server system is small.

The Doppler frequency effect increases in the case where the symbol cycle is increased and the mobile radio moves at high speed. The carrier wave frequency will now be explained, taking this point into consideration. Note that the Doppler frequency fd may be expressed as

$$fd= v/\lambda \tag{6}$$

Where, v is the moving speed of the mobile radio and $\lambda$ is the wavelength of the carrier wave.

Figure 26 is a diagram showing the simulation results for the BER characteristics relating to the Doppler frequency when communications are carried out at a symbol rate of 4.8 [kHz] (symbol cycle 208 [μs]), using π/4-QPSK for digital modulation. In this figure, crosses (X) indicate the relationship between the BER and signal noise (Eb/N0) at a Doppler frequency of 70 [Hz]. Similarly, the triangles (△), squares (□), and diamonds (◊) indicate the relationship between the BER and signal noise at Doppler frequencies of 50 [Hz], 30 [Hz] and 10 [Hz], respectively.

When symbol rate is varied, the BER characteristics due to the Doppler frequency at these symbol rates become the values which result when each of the Doppler frequencies in Figure 26 are substituted by values proportional to the changes in the symbol rate.

Therefore, using Figure 26, the following is the result when the relationship of correspondence between the Doppler frequency and symbol rates of 4.8 [kHz], 10 [kHz], and 19.2 [kHz] are obtained.

| Doppler frequency (Hz) | Symbol Rate (kHz) | | | fd/symbol rate |
|---|---|---|---|---|
| | 4.8 | 10 | 19.2 | |
| X | 70 | 146 | 280 | 1/68 |
| Δ | 50 | 104 | 200 | 1/96 |
| □ | 30 | 32 | 120 | 1/160 |
| ◊ | 10 | 21 | 40 | 1/480 |

As stated above, in order to carry out data communications which are highly reliable in a radio server system, in general, it is necessary that the BER before correction be $5 \times 10^{-3}$ or less.

It may be understood from Figure 26 that, for a symbol rate of 4.8 [kHz], the permissible Doppler frequency for reducing the BER to $5 \times 10^{-3}$ or less is 70 [Hz] (indicated by "X" in the figure). In addition, the relationship between the Doppler frequency and the symbol rate in this case becomes

$$\text{fd/symbol rate} \leq 1/68$$

Thus, highly reliable data communications in a radio server system can be carried out if the relationship between the Doppler frequency and the symbol rate is 1/68 or less.

This calculation is the value calculated when the mobile radio is moving linearly with respect to the base station radio. However, it is in fact rare that a mobile radio moves linearly with respect to a base station radio. This is not problematic provided that conditions looser than those stated above are set. Therefore, if the average value of the mobile radio's direction of movement (a value less than 90°) with respect to a straight line between the mobile radio and the base station radio is 45°, then the moving speed of the mobile radio toward the base station radio becomes 1/(INSERT SQUARE ROOT2) of the actual speed of the mobile radio. The Doppler frequency fd from equation (6) is proportional to the moving speed of the mobile radio with respect to the base, so that it is acceptable to set the relationship between the Doppler frequency and the symbol rate to be

$$\text{fd/symbol rate} \leq 1/50 \ (\approx (1/68) \cdot \text{INSERT SQUARE ROOT2})$$

Thus, by employing a carrier wave frequency in which the maximum Doppler frequency (fd) of the moving body (mobile radio) is 1/50 or less of the symbol rate, the BER before correction can be reduced to $5 \times 10^{-3}$ or less. As a result, highly reliable data communications can be carried out.

In the present invention's radio server system, communications are carried out between a base station radio and a mobile radio by setting the symbol cycle for digital modulation to be 100 [μsec] or more and using a carrier wave frequency in which the maximum Doppler frequency of the mobile radio is 1/50 or less of the symbol rate.

The symbol rate when the symbol cycle is 100 [μs] is 10 [kHz]. Thus, the permissible Doppler frequency is

$$\text{fd} = 10 \ [\text{kHz}]/50 = 200 \ [\text{Hz}]$$

Here, the mobile radio is mounted in an object moving at high speed, such as an automobile, with a maximum speed of 150 [km/h] assumed. The relationship between the Doppler frequency fd (200 [Hz]), moving speed (150 [km/h]), and the wavelength of the carrier wave is as shown by equation (6). The frequency of the carrier wave in this case is 1.4 [GHz] based on the determined wavelength of the carrier wave.

When a symbol cycle of 208 [μs] (symbol rate: 4.8 [kHz]) and a maximum speed of the mobile radio of 150 [km/h] are employed in this radio server system, then the carrier wave frequency is approximately 700 [MHz].

The preceding employed π/4 - DQPSK as an example of digital modulation. Note, however, that the same explanation applies in the case of other digital modulation such as QAM (Quadrature Amplitude Modulation), QPSK (Differential Quadrature Phase Shift Keying), PSK (Phase Shift Keying), DPSK (Differential Phase Shift Keying), and the like.

By setting the symbol cycle for digital modulation in the radio server system to be 100 [μsec] or more in this way, the zone radius can be expanded. Thus, a fewer number of base station radios need to be provided, so that the necessary facilities investment in the network between base station radios can be reduced. As a result, the system becomes less expensive, while the maintenance costs are also reduced.

In addition, it becomes unnecessary to expand the zone radius through antenna directionality or electric power adjustments. Accordingly, from this perspective as well, the system and maintenance costs become less expensive.

Further, since the zone radius can be expanded and the present invention applied in the case where the mobile radio is moving at high speed, it is possible to cover a specific area with a small number of base station radios, even in an environment where mobile radios are moving at various speeds. As a result, the load on the network between base station radios is reduced and system efficiency is improved. Accordingly, from this point as well, an improvement is realized in system costs.

By setting the symbol cycle for digital modulation in the radio server system to be 100 [μsec] or more, it is possible to reduce the impact from delay waves so that reflected waves are utilized more effectively as a result. Thus, outside communications using reflected waves can be carried out effectively, and the proportion of the total zone area in which communications are possible can be improved.

Moreover, since the base station radios can be provided without much consideration to topography, it becomes possible to design an efficient zone according to user density.

Become this radio server system is a connectionless radio sewer system, the communications protocol between networks becomes simple. Thus, the stability between networks is improved and the costs necessary for protocol development or optimization for different services is reduced.

In addition, because this server system is connectionless, the protocol for wireless communications becomes simple. As a result, it becomes possible to provide a radio sewer system in which there is good affinity with connectionless Internet protocols (IP), so that the benefit of IP is not lost.

In other words, in the present invention's radio server, communications between a base station radio and a mobile radio are carried out by setting the symbol cycle for digital modulation to 100 [μsec] or more and using a carrier wave frequency in which the maximum Doppler frequency of the mobile radio is 1/50 or less of the symbol rate. As a result, wireless data communications are made possible which are less costly, have better efficiency and are more reliable.

A specific example of the design of a service area (i.e., zone design for each base station radio) using the present invention's radio server system will now be explained.

In the example used here, a service area is designed for Boston, Massachusetts in the United States.

Ten base station radios are required in order to entirely cover the city of Boston in this service area design. Note, however, that if the range of activity of the mobile radio can be specified, then it is possible to reduce the number of base station radios. The frequency band width which currently can be used by this system in the United States is around 20 MHz. If the channel interval in the communications system is 6.25 [kHz], then approximately 3200 (=20 [MHz]/6.25 [kHz] channels can be assured. Since 8 channels are assigned to each of the 10 base station radios, around 400 services (=3200 channels/8 channels) are possible in Boston, making it is possible to respond to a diversity of services. Thus, in terms of the design of the service area as well, the present invention's radio server system may be viewed to offer an extremely high rate of frequency utilization.

The processing performed in the base station radios or mobile radios in this radio server system is mainly digital processing. Thus, a recording media in which programs for executing the functions of the base station radio and mobile radio may be provided, and these functions may be realized by executing these programs using a computer (CPU).

In other words, the mobile radio for a radio server system which connects to the Internet via a radio server in which a mobile radio is connected to a base station radio using data communications may also be designed as follows. Namely, programs may be recorded in a computer-readable media for realizing control functions for the mobile radio in a radio server system having a wireless propagation path state detecting means for detecting the state of the propagation path on which communications are carried out and a communications control means for adaptively performing communications control in response to the state of the wireless propagation path which was detected by the wireless propagation path state detecting means. Communications control may then be carried out by reading the programs recorded in this media into the computer system and executing them.

It is also acceptable to perform communications control in a mobile radio in a two-cycle symplex operation type radio server system in which packet data is continuously sent from the base station radio and burst data is sent from each mobile radio to the base station radio by recording in a computer-readable media programs for realizing the control functions for the mobile radio in a radio server system having a wireless propagation path state detecting means for detecting the wireless propagation path state on which communications are carried out, and a communications control means for adaptively performing communications control in response to the state of the wireless propagation path detected by the wireless propagation path state detecting means. Communications control may then be carried out by reading the programs recorded in this media into the computer system and executing them.

It is also acceptable to perform communications control in a mobile radio in a two-cycle symplex operation type radio server system in which packet data is continuously sent from the base station radio and burst data is sent from each mobile radio to the base station radio by recording in a computer-readable media programs for realizing the control functions for the mobile radio in a radio server system having a wireless propagation path state detecting means for detecting the wireless propagation path state on which communications are carried out, and a communications control means for adaptively selecting the transmission method, communicating the selected transmission method to the base station radio, and receiving the data sent from the base station radio after this notification when a determination is made that the transmission/reception timing was not received within a specific time interval based on the state of the wireless propagation path detected by the wireless propagation path state detecting means.

The wireless propagation path state detecting means may also carry out communications control by recording in a computer-readable media the programs for realizing the control functions for the mobile radio in a radio server system in which the dispersion in the presumed error signal of the equalizer, which compensates the frequency error in frequency synchronizing control, is designated as the state detecting signal for the wireless propagation path. Communications may then carried out by reading the programs recorded in this media into the computer system and executing them.

The wireless propagation path detecting means may also be designed so that programs are recorded in a computer-readable recording media for realizing the control functions of the mobile radio in a radio server system in which the presence or absence of a delay error is detected based on the presumed error signal and the tap coefficient for the equalizer which is used to equalize the waveform of delay waves in the received signal, and the detected signal is designated as the state detecting signal for the wireless propagation path. Communications control may then be performed by reading the programs recorded in this recording media into the computer system and executing them.

The communications control means may also perform communications control by recording programs in a computer-readable media for realizing the control functions of the mobile radio in a radio server system in which control is carried out so as to select the timing at which communications are performed based on the detection output from the wireless propagation path state detecting means. Communications control can then be carried out by reading these programs recorded in the recording media into the computer system and executing them.

In a radio server system which connects to the Internet via a radio server in which a mobile radio is connected to a base station radio by carrying out data communications between a plurality of base station radios provided in zones and a plurality of mobile radios such that the base station radio continuously sends data and the mobile radio sends a burst signal to the base station radio, the radio server system's mobile radio may be designed to perform communications control as follows. Namely, programs may be recorded in a computer-readable media for realizing the control functions for a mobile radio in a radio server system having a frequency synchronizing control means in which digital phase shift keying (PSK) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. Communications control may then be carried out by reading the programs recorded in the recording media into the computer system and executing them.

By reading the programs recorded in this recording media into the computer system and executing them, it is possible to perform frequency synchronization without using a high accuracy frequency synchronization oscillator, even when a phase revolution of $\pi/4$ or greater per cycle interval has occurred.

In a radio server system which connects to the Internet via a radio server in which a mobile radio is connected to a base station radio by carrying out data communications between a plurality of bases station each disposed in a zone and a plurality of mobile radios such that the base station radio continuously sends data and the mobile radio sends a burst signal to the base station radio, the radio server system's mobile radio may be designed to perform communications control as follows. Namely, programs may be recorded in a computer-readable media for realizing the control functions for a mobile radio in a radio server system having a frequency synchronizing control means in which differential phase shift keying (DPSK) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. Communications control may then be carried out by reading the programs recorded in the recording media into the computer system and executing them.

By reading the programs recorded in this recording media into the computer system and executing them, it is possible to perform frequency synchronization without using a high accuracy frequency synchronization oscillator, even when a phase revolution of $\pi/4$ or greater per cycle interval has occurred.

In a radio server system which connects to the Internet via a radio server in which a mobile radio is connected to a base station radio by carrying out data communications between a plurality of bases station each disposed in a zone and a plurality of mobile radios such that the base station radio continuously sends data and the mobile radio sends a burst signal to the base station radio, the radio server system's mobile radio may be designed to perform communications control as follows. Namely, programs may be recorded in a computer-readable recording media for realizing the control functions for a mobile radio in a radio server system having a frequency synchronizing control means in which quadrature amplitude modulation (QAM) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. Communications control may then be carried out by reading the programs recorded in the recording media into the computer system and executing them.

By reading the programs recorded in this recording media into the computer system and executing them, it is possible to perform frequency synchronization without using a high accuracy frequency synchronization oscillator, even when a phase revolution of $\pi/4$ or greater per cycle interval has occurred.

In a radio server system which connects to the Internet via a radio server in which a mobile radio is connected to a base station radio by carrying out data communications between a plurality of base station radios each disposed in a zone and a plurality of mobile radios such that the base station radio continuously sends data and the mobile radio sends a burst signal to the base station radio, the radio server system's mobile radio may be designed to perform communications control as follows. Namely, programs may be recorded in a computer-readable recording media for realizing the control functions for a mobile radio in a radio server system having a wireless propagation path state detecting means for detecting the state of the wireless propagation path for carrying out communications, and a communications control means for adaptively performing communications control in response to the wireless propagation path state that was detected by the wireless propagation path state detecting means.

Complicated or numerous calculations are not required and a high degree of transmission efficiency can be maintained for this mobile radio in a radio server system that connects to the Internet via a radio server in which a mobile radio is connected to a base station radio by performing data communications by reading the programs recorded in the recording media into the computer system and executing them.

In a radio server system in which the communications service area consists of a plurality of zones and the radio server system connects to the Internet via a radio server in which a mobile radio is connected to a base station radio by carrying out data communications between base station radios disposed in each of the zones and a plurality of mobile radios such that the base station radio continuously sends data and the mobile radio sends a burst signal to the base station radio, it is also acceptable for communications control to be carried out as follows. Namely, programs may be recorded in a computer-readable recording media for realizing the control functions for the base station radio in a radio server system in which each base station radio communicates using a single frequency within one zone which is different from neighboring zones, and each mobile radio detects the frequency used by the base station radio within its zone, and communicates with the base station radio using the detected frequency. Communications control can then be carried out by reading the programs recorded in the recording media into the computer system, and executing them.

By reading the programs recorded in the recording media into a computer system and executing them in this way, a connection procedure is not required, two-way communications can be carried out, the facility cost for the base station radio can be reduced and the provision of the base station radio can be easily carried out.

In a two-cycle symplex operation type radio server system in which the communications service area consists of a plurality of zones and data communications are carried out between base station radios disposed in each of the zones and a plurality of mobile radios such that the base station radio continuously sends data and the mobile radio sends a burst signal to the base station radio, it is also acceptable to carry out communications control as follows. Namely, programs may be recorded in a computer-readable media for realizing the control function for a base station radio in a radio server system in which each base station radio communicates using a single frequency within one zone which is different from neighboring zones, and each mobile radio detects the frequency used by the base station radio within its zone, and communicates with the base station radio using the detected frequency. Communications control may then be performed by reading the programs recorded in this recording media into the computer system, and executing them.

By reading the programs recorded in the recording media into a computer system and executing them in this way, a radio server system can be formed which effectively utilizes the wireless frequency band for a two-cycle symplex operation method.

It is also acceptable for the mobile radio in the radio server system to perform communications control as follows. Namely, programs are recorded in a computer-readable media for realizing the control functions for a mobile radio in the radio server system according to claim 9, in which control is carried out for the transmission of the burst signal sent to the base station radio based on the information included in the packet which is sent from the base station radio, and there are multiple connections with a plurality of mobile radios. Communications control is then carried out by reading these programs recorded in the recording media into a computer system and executing them.

By reading the programs recorded in the recording media into a computer system and executing them in this way, a radio server system can be formed which performs data communications in packet units in a two-cycle symplex operation method with good efficiency.

Note that in this specification, the term "computer system" includes hardware such as an OS or peripheral devices. Also, the term "computer-readable media" means a transportable media such as a floppy disk, photomagnetic disk, ROM, CD-ROM or the like, or a recording device, such as a hard disk, which is housed inside the computer system. In addition, a "computer-readable media" shall include things which dynamically maintain a program for a short period of time, such as in the case of a communications line when sending programs via a network like the Internet or a communications circuit like a telephone circuit, as well as things which maintain a program for a fixed period of time, as in the case of the volatile memory in a computer system composed of a server and client. The aforementioned program may realize a portion of the above-described functions, or may realize these functions by being combined with programs already recorded in the computer system.

In a radio server system which connects to the Internet via a radio server in which a mobile radio is connected to a base station radio by carrying out data communications between a plurality of base station radios disposed in each of the zones and a plurality of mobile radios such that the base station radio continuously sends data and the mobile radio sends a burst signal to the base station radio, each base station radio communicates using a single frequency within one zone which is different from neighboring zones, and each mobile radio detects the frequency used by the base station radio within its zone, and communicates with the base station radio using the detected frequency. As a result, a connection procedure is not necessary, two-way communications can be carried out, the facilities cost for the base station radio can be reduced, and the provision of the base station radio can be easily carried out.

The mobile radio in the above-described radio server system has a frequency synchronizing control means in which PSK modulation is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. As a result, in addition to the effects obtained from the invention according to claim 1, it is possible to perform frequency synchronization without using a high accuracy frequency synchronization oscillator, even when a phase revolution of $\pi/4$ or greater per cycle interval has occurred.

The mobile radio in the above-described radio server system has a frequency synchronizing control means in which DPSK modulation is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. As a result, in addition to the effects obtained from the invention according to claim 1, it is possible to perform frequency synchronization without using a high accuracy frequency synchronization oscillator, even when a phase revolution of $\pi/4$ or greater per cycle interval has occurred.

The mobile radio in the above-described radio server system has a frequency synchronizing control means in which QAM modulation is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. As a result, in addition to the effects obtained from the invention according to claim 1, it is possible to perform frequency synchronization without using a high accuracy frequency synchronization oscillator, even when a phase revolution of $\pi/4$ or greater per cycle interval has occurred.

The mobile radio in the radio server system is designed to detect the state of the wireless propagation path for communications by mean of a wireless propagation path state detecting means, and adaptively perform communications control in response to the wireless propagation path state detected by the wireless propagation path state detecting means. As a result, in addition to the effects obtained by the invention according to claim 1, the mobile radio in the radio server system which connects to the Internet via a radio server in which a mobile radio is connected to a base station radio through data communications does not perform complicated or numerous calculations and is able to maintain a high transmission rate.

As a result of the present invention, in a two-cycle symplex operation type radio server system, each base station radio communicates using a single frequency within one zone which is different from neighboring zones, and each mobile radio detects the frequency used by the base station radio within its zone, and communicates with the base station radio using the detected frequency. As a result, a radio server system can be formed which effectively utilizes the wireless frequency band for a two-cycle symplex operation method.

In addition, the transmission of the burst signal sent to the base station radio is controlled based on information included in the packet sent from the base station radio, real time communications such as voice communications are not performed, and multiple connections segregated into packets are present. As a result, data communications using packet units can be carried out with good efficiency in a two-cycle symplex operation method.

In the present invention, programs are recorded in a computer-readable media for realizing control of functions for a mobile radio in a radio server system having a frequency synchronizing control means in which digital phase shift keying (PSK: Phase Shift Keying) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. By reading the programs recorded in the recording media into the computer system and executing them, it is possible to perform frequency synchronization without using a high accuracy frequency synchronization oscillator, even when a phase revolution of π/4 or greater per one cycle interval has occurred.

In the present invention, programs are recorded in a computer-readable media for realizing the control functions for a mobile radio in a radio server system having a frequency synchronizing control means in which differential phase shift keying (DPSK) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. As a result, by reading the programs recorded in this recording media into the computer system and executing them, it is possible to perform frequency synchronization without using a high accuracy frequency synchronization oscillator, even when a phase revolution of π/4 or greater per one cycle interval has occurred.

In the present invention, programs are recorded in a computer-readable recording media for realizing the control functions for a mobile radio in a radio server system having a frequency synchronizing control means in which quadrature amplitude modulation (QAM) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input. By reading the programs recorded in this recording media into the computer system and executing them, it is possible to perform frequency synchronization without using a high accuracy frequency synchronization oscillator, even when a phase revolution of π/4 or greater per cycle interval has occurred.

In the present invention, programs are recorded in a computer-readable recording media for realizing the control functions of a mobile radio in a radio server system according to the present invention, which has a wireless propagation path state detecting means for detecting the state of the wireless propagation path for carrying out communications, and a communications control means for adaptively performing communications control in response to the wireless propagation path state that was detected by the wireless propagation path state detecting means. Accordingly, in a radio server system which connects to the Internet via a radio server in which a mobile radio is connected to a base station radio by carrying out data communications by reading the programs recorded in the recording media into the computer system and executing them, the mobile radio is able to maintain a high transmission rate without performing complicated and numerous calculations.

In the present invention, programs are recorded in a computer-readable media for realizing the control functions for a base station radio in a radio server system in which the communications service area consists of a plurality of zones and the radio server system connects to the Internet via a radio server in which a mobile radio is connected to a base station radio by carrying out data communications between base station radios disposed in each of the zones and a plurality of mobile radios such that the base station radio continuously sends data and the mobile radio sends a burst signal to the base station radio, wherein each base station radio communicates using a single frequency within one zone which is different from neighboring zones, and each mobile radio detects the frequency used by the base station radio within its zone, and communicates with the base station radio using the detected frequency. Accordingly, by reading the programs recorded in the recording media into the computer system, and executing them, a connection procedure is not necessary, two-way communications are possible, the facilities cost for the base station radio is reduced, and the provision of the base station radio can be easily carried out.

In the present invention, programs are recorded in a computer-readable media for realizing the control functions for a base station radio in a two-cycle symplex operation type radio server system in which the communications service area consists of a plurality of zones, and data communications are carried out between base station radios disposed in each of the zones and a plurality of mobile radios such that the base station radio continuously sends data and the mobile radio sends a burst signal to the base station radio, wherein each base station radio communicates using a single frequency within one zone which is different from neighboring zones, and each mobile radio detects the frequency used by the base station radio within its zone, and communicates with the base station radio using the detected frequency. Accordingly, by reading the programs recorded in the recording media into the computer system, and executing them, it becomes possible to form a radio server system which effectively utilizes a two-cycle symplex operation type wireless frequency band.

In the present invention, the mobile radio in the radio server system is designed such that programs are recorded in a computer-readable media for realizing the control functions for a mobile radio in the radio server system according to claim 9, in which control is carried out for the transmission of the burst signal sent to the base station radio based on the information included in the packet which is sent from the base station radio, and there are multiple connections with a plurality of mobile radios. As a result, by reading these programs recorded in the recording media into a computer system and executing them, it is possible to form a radio server system capable of performing data communications using packet units with good efficiency in a two-cycle symplex operation method.

In the present invention's radio server, communications between a base station radio and a mobile radio are carried out by setting the symbol cycle for digital modulation to 100 [μsec] or more. As a result, it is possible to reduce the impact from multiplex delay waves due to multipass phasing, even if the base station radio's zone radius is expanded. In addition, the present invention performs communications between a base station radio and a mobile radio by using a carrier wave frequency in which the maximum Doppler frequency of the mobile radio is 1/50 or less of the symbol rate. As a result, the reliability of communications can be maintained, even if the mobile radio is moving at high speed.

## Claims

1. A radio communication system in which the communications service area consists of a plurality of zones, and data communications between base station radios(B) disposed in each of the zones and a plurality of mobile radios(1) is carried out by continuously sending data from the base station radio and sending a burst signal from the mobile radio to the base station radio; wherein:

   the base station radio communicates using a single frequency, and neighboring base station radios communicate using a frequency which is different from that used by said base station radio; and
   each mobile radio detects the frequency used by said base station radio within the zone of said base station radio, and communicates with said base station radio using said detected frequency.

2. A mobile radio(1) in a radio communication system in which the communications service area consists of a plurality of zones, and data communications between base station radios(B) disposed in each of the zones and a plurality of mobile radios is carried out by continuously sending data using a single frequency that is different from the frequency used by neighboring base station radios, and each mobile radio sends a burst signal to the base station radio; wherein:

   the mobile radio detects the frequency used by said base station radio within the base station radio zone, and communicates with said base station radio using said detected frequency.

3. A mobile radio according to claim 2, wherein said mobile radio has a frequency synchronization control means (20) that uses digital phase shift keying (PSK) to carry out frequency synchronization based on phase difference data for the signal received in a time interval which is shorter than the symbol interval, and corrects the frequency of the standard signal for performing frequency synchronization using an average value obtained over the time interval in which several or more, or two or more, symbols of phase difference data are input.

4. A mobile radio according to claim 2, wherein said mobile radio has a frequency synchronization control means (20) that uses differential phase shift keying (DPSK) to carry out frequency synchronization based on phase difference data for the signal received in a time interval which is shorter than the symbol interval, and corrects the frequency of the standard signal for performing frequency synchronization using an average value obtained over the time interval in which several or more, or two or more, symbols of phase difference data are input.

5. A mobile radio according to claim 2, wherein said mobile radio has a frequency synchronization control means (20) that uses quadrature amplitude modulation (QAM) to carry out frequency synchronization based on phase difference data for the signal received in a time interval which is shorter than the symbol interval, and corrects the frequency of the standard signal for performing frequency synchronization using an average value obtained over the time interval in which several or more, or two or more, symbols of phase difference data are input.

6. A mobile radio according to claim 2, wherein said mobile radio has a wireless propagation path state detecting means (312) for detecting the state of the wireless propagation path on which communications are performed; and a communications control means (314) for /adaptively controlling communications in accordance with the state of the wireless propagation path detected by said wireless propagation path state detecting means (312).

7. A radio communication system employing a two-cycle symplex operation method in which the communications service area consists of a plurality of zones, and data communications between base station radios(B) disposed in each of the zones and a plurality of mobile radios(1) is carried out by continuously sending data from the base station radio and sending a burst signal from the mobile radio to the base station radio; wherein:

> the base station radio communicates using a single frequency, and neighboring base station radios communicate using a frequency which is different from that used by said base station radio; and
> each mobile radio detects the frequency used by said base station radio within the zone of said base station radio, and communicates with said base station radio using said detected frequency.

8. A mobile radio(1) in a radio communication system employing a two-cycle symplex operation method in which the communications service area consists of a plurality of zone, and data communications between base station radios(B) disposed in each of the zones and a plurality of mobile radios is carried out by continuously sending data using a single frequency that is different from the frequency used by neighboring base station radios, and each mobile radio sends a burst signal to the base station radio; wherein:

> the mobile radio detects the frequency used by said base station radio within the base station radio zone, and communicates with said base station radio using said detected frequency.

9. A mobile radio according to claim 8, wherein said mobile radio (1) controls transmission of the burst signal sent to the base station radio based on the information included in the packet sent from said base station radio (B), and forms multiple connections with a plurality of mobile radios.

10. A radio communication system according to claim 1 or claim 7, wherein communications are carried out between base station radio (B) and mobile radio (1) by setting the symbol cycle for digital modulation to be 100 [µsec] or more, and using a carrier wave frequency in which the maximum Doppler frequency of mobile radio (1) is 1/50 or less of the symbol rate.

11. A mobile radio according to one of claims 2 through 6 or claim 9, wherein communications are carried out between base station radio (B) and mobile radio (1) by setting the symbol cycle for digital modulation to be 100 [µsec] or more, and using a carrier wave frequency in which the maximum Doppler frequency of mobile radio (1) is 1/50 or less of the symbol rate.

12. A radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data and the mobile radio sends a burst signal to the base station radio; wherein:

> the base station radio communicates using a single frequency, and neighboring base station radios communicate using a frequency which is different from that used by said base station radio; and
> each mobile radio detects the frequency used by said base station radio within the zone of said base station radio, and communicates with said base station radio using said detected frequency.

13. A mobile radio (1) in a radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and each mobile radio sends a burst signal to the base station radio, wherein:

> the mobile radio detects the frequency used by said base station radio within the base station radio zone, and communicates with said base station radio using said detected frequency.

14. A radio server system employing a two-cycle symplex operation method in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data and the mobile radio sends a burst signal to the base station radio; wherein:

> the base station radio communicates using a single frequency, and neighboring base station radios communicate using a frequency which is different from that used by said base station radio; and

each mobile radio detects the frequency used by said base station radio within the zone of said base station radio, and communicates with said base station radio using said detected frequency.

15. A mobile radio (1) in a radio server system employing a two-cycle symplex operation method in which the communications service area consists of a plurality of zone, the wireless service system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and each mobile radio sends a burst signal to the base station radio, wherein:

the mobile radio detects the frequency used by said base station radio within the base station radio zone, and communicates with said base station radio using said detected frequency.

16. A base station radio (B) in a radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and each mobile radio sends a burst signal to the base station radio, wherein said base station radio is provided with:

a memory (52) for receiving from the outside the up and down frequencies used by said base station radio, and the down frequency used by base station radios disposed around said base station radio, and recording these frequencies;

a ROM (53) for recording the frequency at which said base station radio can transmit and receive; and determining members (54,55) for determining whether on not the frequencies received from the outside can be used by comparing the up and down frequencies used by said base station radio that are recorded in said memory with the frequency that is recorded in said ROM;

said base station radio using the down frequency used by said base station radio to send the up frequency used by said base station radio and the down frequency used by the neighboring base station radio, when said determining members determine that said received frequency can be used.

17. A mobile radio (1) in a radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and each mobile radio sends a burst signal to the base station radio, wherein said mobile radio is provided with:

a memory (64) for recording the frequency of the transmission/reception signal used immediately before, and the down frequency used by a neighboring base station radio;

a ROM (67) for recording a plurality of frequencies at which said mobile radio can transmit and receive; and determining member (68) for determining whether on not the frequency which said mobile radio is attempting to use in transmission and reception can be employed by comparing the frequencies recorded in said memory with the frequencies recorded in said ROM;

said mobile radio switching sequentially between the reception frequency used immediately before, the down frequency used by the neighboring base station radio and the reception permissible frequency, receiving the up frequency notified by the base station radio, and sending a position recording request only when this up frequency is a frequency permitted for use.

18. A base station radio (B) in a two-cycle symplex operation type radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and each mobile radio sends a burst signal to the base station radio, wherein said base station radio is provided with:

a memory (52) for receiving from the outside the up and down frequencies used by said base station radio, and the down frequency used by base station radios disposed around said base station radio, and recording these frequencies;

a ROM (53) for recording the frequency at which said base station radio can transmit and receive; and determining members (54,55) for determining whether on not the frequencies received from the outside can be used by comparing the up and down frequencies used by said base station radio that are recorded in said memory with the frequency that is recorded in said ROM;

said base station radio using the down frequency used by said base station radio to send the up frequency used by said base station radio and the down frequency used by neighboring base station radios, when said determining members determine that said received frequency can be used.

19. A mobile radio (1) in a two-cycle symplex operation type radio server system in which the communications service area consists of a plurality of zones, the radio server system connecting to the Internet via a radio server (A) in which a mobile radio is connected to a base station radio by carrying out data communications between base station radios (b) disposed in each of the zones and a plurality of mobile radios (1) such that the base station radio continuously sends data using a single frequency that is different from the frequency used by neighboring base station radios, and each mobile radio sends a burst signal to the base station radio, wherein said mobile radio is provided with:

a memory (64) for recording the frequency of the transmission/reception signal used immediately before, and the down frequency used by the neighboring base station radios;

a ROM (67) for recording a plurality of frequencies at which said mobile radio can transmit and receive; and determining member (68) for determining whether on not the frequency which said mobile radio is attempting to use in transmission and reception can be employed by comparing the frequencies recorded in said memory with the frequencies recorded in said ROM;

said mobile radio switching sequentially between the reception frequency used immediately before, the down frequency used by the neighboring base station radio and the reception permissible frequency, receiving the up frequency notified by the base station radio, and sending a position recording request only when this up frequency is a frequency permitted for use.

20. A computer-readable recording media which records a program for a mobile radio(1) in a radio communication system in which the communications service area consists of a plurality of zones, and data communications between base station radios(B) disposed in each of the zones and a plurality of mobile radios is carried out by continuously sending data using a single frequency that is different from the frequency used by neighboring base station radios, and each mobile radio sends a burst signal to the base station radio, wherein said program executes by computer a means for detecting the frequency used by said base station radio in the base station radio zone and communicating with said base station radio at said detected frequency.

21. A recording media according to claim 20, wherein said program further executes by computer a frequency synchronizing control means in which digital phase shift keying (PSK) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input (steps S100~S132).

22. A recording media according to claim 20, wherein said program further executes by computer a frequency synchronizing control means in which differential phase shift keying (DPSK) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input (steps S100~S132).

23. A recording media according to claim 20, wherein said program further executes by computer a frequency synchronizing control means in which quadrature amplitude modulation (QAM) is used to carry out frequency synchronization based on phase difference data for the signal received in a time interval which is shorter than the symbol interval, and the frequency of the standard signal for performing frequency synchronization is corrected using an average value obtained over the time interval in which several or more, or two or more, symbols of phase difference data are input (steps S100~S132).

**24.** A recording media according to claim 20 in which said program further executes by computer a wireless propagation path state detecting means for detecting the wireless propagation path state on which communications are performed (steps S500, S502, S504, S506); and a communications control means for adaptively performing communications control in response to the wireless propagation path state detected by said wireless propagation path state detecting means (steps S400, S402, S404, S406).

**25.** A computer-readable recording media which records a program for a mobile radio(1) in a two-cycle symplex operation type radio communication system in which the communications service area consists of a plurality of zones, and data communications between base station radios(B) disposed in each of the zones and a plurality of mobile radios is carried out by continuously sending data using a single frequency that is different from the frequency used by neighboring base station radios, and each mobile radio sends a burst signal to the base station radio, wherein said program executes by computer a means for detecting the frequency used by said base station radio in the base station radio zone and communicating with said base station radio at said detected frequency.

**26.** A recording media according to claim 25 wherein said program multiply connects a plurality of mobile radios by further executing by computer a transmission control means for the burst signal sent to the base station radio based on information included in the packet sent from said base station radio.

**27.** A computer-readable recording media which records a program for a mobile radio in a radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and each mobile radio sends a burst signal to the base station radio, wherein said program executes by computer a means for detecting the frequency used by said base station radio in the base station radio zone and communicating with said base station radio at said detected frequency.

**28.** A computer-readable recording media which records a program for a mobile radio in a two-cycle symplex operation type radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and each mobile radio sends a burst signal to the base station radio, wherein said program executes by computer a means for detecting the frequency used by said base station radio in the base station radio zone and communicating with said base station radio at said detected frequency.

**29.** A recording media which records a program for a mobile radio in a radio server system in which the communications service area consists of a plurality of zones, the radio server system connecting to the Internet via a radio server (A) in which a mobile radio is connected to a base station radio by carrying out data communications between base station radios (B) disposed in each of the zones and a plurality of mobile radios (1) such that the base station radio continuously sends data using a single frequency that is different from the frequency used by neighboring base station radios, and the mobile radio sends a burst signal to the base station radio; wherein said program executes by computer:

processing for receiving the up frequency notified from said base station radio using the frequency used immediately before, determining whether or not this up frequency can be transmitted, and, if it can be transmitted, sending a position recording request to said base station radio using this up frequency (steps S1, S2, S3, S4, S5);

processing for receiving the up frequency notified from neighboring base station radios using the frequency employed by neighboring base station radios of said base station radio which have carried out communications immediately before in the case where the frequency used immediately before cannot be used, determining whether or not this up frequency can be transmitted, and, if it can be transmitted, transmitting a position recording request to the neighboring base station radio using this up frequency (steps S6, S7, S8, S9, S5); and

processing for searching for a frequency capable of reception when the frequency used immediately before and the frequency used by neighboring base station radios cannot be used by sequentially switching between the reception permissible frequencies stored in said mobile radio, using this reception capable frequency to receive the up frequency notified by the base station radio, determining whether or not this up frequency is capable of transmission, and, if it is capable of transmission, transmitting a position recording request to the base station radio which sent this up frequency (steps S11, S12, S13, S14, S5).

**30.** A recording media which records a program for a mobile radio in a two-cycle symplex operation type radio server system in which the communications service area consists of a plurality of zones, the radio server system connecting to the Internet via a radio server in which a mobile radio is connected to a base station radio by carrying out data communications between base station radios disposed in each of the zones and a plurality of mobile radios such that the base station radio continuously sends data using a single frequency that is different from the frequency used by neighboring base station radios, and the mobile radio sends a burst signal to the base station radio; wherein said program executes by computer:

processing for receiving the up frequency notified from said base station radio using the frequency used immediately before, determining whether or not this up frequency can be transmitted, and, if it can be transmitted, sending a position recording request to said base station radio using this up frequency (steps S1, S2, S3, S4, S5);
processing for receiving the up frequency notified from neighboring base station radios using the frequency employed by neighboring base station radios of said base station radio which have carried out communications immediately before in the case where the frequency used immediately before cannot be used, determining whether or not this up frequency can be transmitted, and, if it can be transmitted, transmitting a position recording request to the neighboring base station radio using this up frequency (steps S6, S7, S8, S9, S5); and
processing for searching for a frequency capable of reception when the frequency used immediately before and the frequency used by neighboring base station radios cannot be used by sequentially switching between the reception permissible frequencies stored in said mobile radio, using this reception capable frequency to receive the up frequency notified by the base station radio, determining whether or not this up frequency is capable of transmission, and, if it is capable of transmission, transmitting a position recording request to the base station radio which sent this up frequency (steps S11, S12, S13, S14, S5).

# FIG. 1

EP 0 993 147 A2

# FIG. 2

EP 0 993 147 A2

SERVER

B-1

SERVER DATA RECEIVER

51

MEMORY

52

DOWN FREQUENCY OF NEIGHBORING BASE STATION RADIO

52a

SELF UP FREQUENCY

52b

SELF DOWN FREQUENCY

52c

DETERMINING MEMBER

54

ROM

53

RECEPTION PERMISSIBLE FREQUENCY (UP FREQUENCY)

53a

RECEPTION PERMISSIBLE FREQUENCY (DOWN FREQUENCY)

53b

DETERMINING MEMBER

55

TRANSMISSION DATA CREATING MEMBER

56

MODULATOR

57

SIGNAL TRANSMITTER

58

# FIG. 3

EP 0 993 147 A2

FIG. 4

START

SELECT FREQUENCY OF BASE STATION RADIO USED IMMEDIATELY BEFORE — S1

SIGNAL RECEPTION SUCCESSFUL ? — S2
- NO →
- YES ↓

OBTAIN UP FREQUENCY — S3

UP FREQUENCY TRANSMISSION POSSIBLE? — S4
- NO →
- YES ↓

SELECT FREQUENCY OF NEIGHBORING BASE STATION RADIO — S6

SIGNAL RECEPTION SUCCESSFUL ? — S7
- NO →
- YES ↓

COLLECT UP FREQUENCY — S8

UP FREQUENCY TRANSMISSION POSSIBLE? — S9
- NO →
- YES →

NEXT CANDIDATE AVAILABLE? — S10
- YES →
- NO ↓

SELECT RECEPTION PERMISSIBLE FREQUENCY IN ROM — S11

SIGNAL RECEPTION SUCCESSFUL? — S12
- NO →
- YES ↓

COLLECT UP FREQUENCY? — S13

UP FREQUENCY TRANSMISSION POSSIBLE? — S14
- YES →
- NO ↓

NEXT CANDIDATE AVAILABLE? — S15
- YES →
- NO ↓

TRANSMIT RECORDING REQUEST — S5

END

END

FIG. 5

# FIG. 6

TRANSMISSION FROM
MOBILE RADIO 1-1 TO
MOBILE RADIO 2-2                                    ZONE Z1

| M2-2 |                                        MOBILE RADIO 1-1
                                                 TRANSMISSION

| M2-2 |                                        BASE STATION
BASE STATION RADIO 1          t2                 RADIO 1 RECEPTION
RECEPTION

WIRED CIRCUIT BASE
STATION RADIO 1

WIRED CIRCUIT
BASE STATION RADIO 2                  DELAY ΔT

t1

TRANSMITTING TO              t3              ZONE Z2
MOBILE RADIO 2-1

| M2-1 | M2-2 |                              BASE STATION
                                             RADIO 2
                                             TRANSMISSION

              | M2-2 |                       MOBILE RADIO 2-2
MOBILE RADIO 2-2                             RECEPTION
RECEPTION

EP 0 993 147 A2

# FIG. 7

EP 0 993 147 A2

TRANSMITTING INTERRUPT TO MOBILE RADIO 2-2

$t_n$  $t_{n+1}$

TRANSMITTING TO
MOBILE RADIO 2-1

TRANSMITTING TO
MOBILE RADIO 2-1 NEXT

| M2-1 | M2-2 | M2-1 |

BASE STATION RADIO 2
TRANSMISSION

| M2-2 |

MOBILE RADIO 2-2
RECEPTION

MOBILE RADIO 2-2
RECEPTION

# FIG. 8

EP 0 993 147 A2

# FIG. 9

START

PHASE DIFFERENCE
SAMPLING DETECTION — S100

FIX M TO
CONSTANT VALUE — S102

①

CALCULATE PHASE DIFFERENCE
AVERAGE VALUE $\Delta \theta$ K — S104

CONTROL VCO ACCORDING TO
PHASE DIFFERENCE AVERAGE
VALUE $\Delta \theta$ K — S106

CALCULATE DISPERSION V IN
PHASE DIFFERENCE AVERAGE
VALUE $\Delta \theta$ K — S108

S110 — $V \geqq j$? — NO

YES

S112 — $N \leftarrow N+1$

S114

$V \leqq k$? — NO — ⓙ

YES — S115

$N > \alpha$ — NO

YES — S116

$N \leftarrow N-1$

ⓘ

# FIG. 10

```
                    ( j )
                      │
                      ▼
          ┌─────────────────────┐
          │      SET N TO        │────── S118
          │   CONSTANT VALUE     │
          └─────────────────────┘
                      │
                      ▼                        S120
                   ╱──────────╲        NO
             ╱──────────────────────╲──────────┐
             ╲  |Δθk| ≧ ΔθTH  ╱                 │
                   ╲──────────╱                 │
                      │ YES         S122        │
                      ▼                         │
          ┌─────────────────────┐              │
          │      SET N TO        │             │
          │   CONSTANT VALUE     │   S124       │
          └─────────────────────┘              │
                      │                    S127 │
                      ▼                         ▼
          ┌─────────────────────┐          ╱────────╲     NO
          │   CALCULATE PHASE    │      ╱──────────────╲────┐
          │    DIFFERENCE        │      ╲    M > 2     ╱     │
          │  AVERAGE VALUE ΔθK   │         ╲────────╱        │
          └─────────────────────┘            │ YES           │
                      │                       ▼      S128     │
                      ▼                ┌──────────────┐       │
          ┌─────────────────────┐      │   M ← M/2    │       │
          │     CONTROL VCO      │      └──────────────┘       │
          │  ACCORDING TO PHASE  │                            │
          │  DIFFERENCE AVERAGE  │──── S126                   │
          │     VALUE ΔθK        │◄──────────────────────────┘
          └─────────────────────┘
                      │
                      ▼                        S130
              NO   ╱──────────╲
         ┌──────╱──────────────────╲
         │      ╲  |Δθk| ≦ π/4 ╱
         │          ╲──────────╱
         │              │ YES         S132
         │              ▼
         │  ┌─────────────────────┐
         │  ║   ADAPTIVE PHASE    ║
         │  ║     CONTROL         ║
         │  └─────────────────────┘
         │              │
         │              ▼
         │          (  END  )
```

# FIG. 11

```
            ▽
            │
    ┌───────┴───────────────┐
┌──►│   UPTAKE QUADRATURE   │────── S200
│   │  DEMODULATION OUTPUT  │
│   │         X(i)          │
│   └───────────┬───────────┘
│               │
│   ┌───────────┴───────────┐
│   │  PHASE COMPENSATION    │────── S202
│   │   d(i)=x(i) · w(i)      │
│   └───────────┬───────────┘
│               │
│   ┌───────────┴───────────┐
│   │  DETERMINE PHASE INTERVAL │── S204
│   └───────────┬───────────┘
│               │
│   ┌───────────┴───────────┐
│   │ OUTPUT DETERMINATION VALUE │── S206
│   │         z(i)          │
│   └───────────┬───────────┘
│               │
│   ┌───────────┴───────────┐
│   │  CALCULATE ERROR e(i)  │────── S208
│   │    e(i)=z(i)-d(i)      │
│   └───────────┬───────────┘
│               │
│   ┌───────────┴───────────┐
│   │ DETERMINE TAP COEFFICIENT │── S210
│   │ ACCORDING TO LMS ALGORITHM │
│   └───────────┬───────────┘
│               │
│   ┌───────────┴───────────┐
│   │  SET TAP COEFFICIENT IN │──── S212
│   │   TRANSVERSAL FILTER   │
│   └───────────┬───────────┘
│               │
└───────────────┘
```

# FIG. 12

# FIG. 13

# FIG. 14

# FIG. 15

RECEPTION
CIRCUIT
304

RECEPTION
DATA BUFFER
306

ANTENNA

WIRELESS PROPAGATION
PATH STATE
DETECTING CIRCUIT
312

300

314

COMMUNICATIONS
CONTROL CIRCUIT

302

310

308

TRANSMISSION
CIRCUIT

TRANSMISSION
DATA BUFFER

EP 0 993 147 A2

FIG. 16

# FIG. 17

BER CHARACTERISTICS

I ; 0.04~0.045
H ; 0.035~0.04
G ; 0.03~0.035
F ; 0.025~0.03
E ; 0.02~0.025
D ; 0.015~0.02
C ; 0.01~0.015
B ; 0.005~0.01
A ; 0~0.005

EP 0 993 147 A2

# FIG. 18

SN(dB)

MOVING SPEED (km/h)

PRESUMED ERROR VARIANCE CHARACTERISTICS

F; 0.0125~0.015
E; 0.01~0.0125
D; 0.0075~0.01
C; 0.05~0.075
B; 0.0025~0.005
A; 0~0.0025

EP 0 993 147 A2

# FIG.19

TRANSMISSION

S400

PROPAGATION
PATH STATE → POOR

GOOD

S404

MORE THAN
N SECONDS SINCE THE START OF
TRANSMISSION CONTROL OPERATION
? → NO

YES

S406

REQUEST TRANSMISSION DATA
CONVERSION OR RECEPTION DATA
CONVERSION

S402

TRANSMISSION START OR
RECEPTION PERMISSIBLE

END

EP 0 993 147 A2

# FIG. 20

```
        ┌──────────────┐
        │    START     │
        └──────┬───────┘
               │
               ▼
    ┌─────────────────────────┐
    │  RECEIVE SIGNAL FROM     │  ──── S500
    │  BASE STATION RADIO      │
    └──────────┬──────────────┘
               │
               ▼
    ┌─────────────────────────┐
    │  DETECT PRESUMED ERROR   │  ──── S502
    │  e(i) OF EQUALIZER       │
    └──────────┬──────────────┘
               │
               ▼
    ┌─────────────────────────┐
    │  CALCULATE DISPERSION V IN│ ──── S504
    │  PRESUMED ERROR          │
    │  e(i)                    │
    └──────────┬──────────────┘
               │
               ▼
    ┌─────────────────────────┐
    │  ESTIMATE BER FROM       │  ──── S506
    │  DISPERSION V IN PRESUMED ERROR│
    │  e(i), S/N               │
    └──────────┬──────────────┘
               │
               ▼
        ┌──────────────┐
        │     END      │
        └──────────────┘
```

# FIG. 21

DATA

DATA
REQUEST

NO REQUEST                    OK

602

600

| ERROR RATE OF PROPAGATION PATH | $10^{-4}$ | $10^{-6}$ | $10^{-4}$ |
|---|---|---|---|

RECEIVER REQUESTS DATA    DATA RECEPTION

←————————— A —————————→ B →←— C —

USER REQUESTS DATA                    DATA RECEPTION

SEVERAL SECONDS
(2~5 SECONDS)

$t_3$                    $t_3$

# FIG. 22

RECEIVING DATA FROM
MOBILE RADIO 1

RECEIVING DATA FROM
MOBILE RADIO 2

| NO RECEPTION | RECEIVING | RECEIVING | NO RECEPTION | RECEIVING | NO RECEPTION | NO RECEPTION | BASE STATION RADIO TRANSMISSION |

| TRANSMISSION | TRANSMISSION | MOBILE RADIO 1 TRANSMISSION |

| TRANSMISSION | MOBILE RADIO 2 TRANSMISSION |

$T_n$    $T_{n+1}$    $T_{n+2}$    $T_{n+3}$

EP 0 993 147 A2

# FIG. 23

START

RECEPTION — S700

BASE STATION
RADIO RECEIVING
? — S702    YES

NO — S704

TRANSMISSION

END

# FIG. 24

TRANSMISSION/RECEPTION SWITCHING TIME
IN WIRELESS CONNECTION

Ts     Ts

User1-1    User1-2    User1-1    VOICE

↓f2    ↑f1    ↓f2

BASE STATION RADIO    WIRELESS TRANSMISSION

↓f1    ↑    ↓f1

User1-1    User1-2    User1-1    VOICE

↓f1

TIME t

EP 0 993 147 A2

# FIG. 25

# FIG. 26

# FIG. 27

| COMMUNICATIONS METHOD | RANDOM COMMUNICATIONS | ADAPTIVE COMMUNICATIONS |
|---|---|---|
| BER | 0. 00324 | 15  0. 0000162 |